**Europäisches Patentamt**

(19) **European Patent Office**

**Office européen des brevets**

(11) Veröffentlichungsnummer: **0 086 864**

**A1**

(12) # EUROPÄISCHE PATENTANMELDUNG

(21) Anmeldenummer: **82103478.2**

(51) Int. Cl.³: **F 16 D 3/32**

(22) Anmeldetag: **24.04.82**

(30) Priorität: **18.02.82 DE 3205715**

(43) Veröffentlichungstag der Anmeldung:
**31.08.83 Patentblatt 83/35**

(84) Benannte Vertragsstaaten:
**AT BE CH DE FR GB IT LI LU NL SE**

(71) Anmelder: **Chivari, Ilie
Berliner Strasse 1
D-4690 Herne 2(DE)**

(72) Erfinder: **Chivari, Ilie
Berliner Strasse 1
D-4690 Herne 2(DE)**

(74) Vertreter: **Weisse, Jürgen, Dipl.-Phys. et al,
Bökenbusch 41 Postfach 11 03 86
D-5620 Velbert 11-Langenberg(DE)**

(54) Doppelkreuzgelenk.

(57) Ein homokinetisches Doppelkreuzgelenk mit Zwischengliedern (12,32) die durch senkrechte Schwenkachsen (16,26,36) Endstücke (10,12) und zumindest ein Mittelstück (24) verbinden, hat Führungselemente um das Mittelstück in einer Ebene zu halten, die durch die Winkelhalbierende des Winkels zwischen der Antriebsachse (11) und der Abtriebsachse (31) verläuft. Beispiele für die Führungselemente sind Gummi- oder Schraubenfedern (50,52,80,82) zwischen den Endstücken (10,12) und dem Mittelstück (24), Gummiringe als Lagerung für die Schwenkachsen, ein Kegelradsatz (60,62,64,70,72,74) in einem Rahmen in dem Mittelstück und eine zentrale Führungsachse (440,540,640,740) kugelgelenkig gelagert in den Endstücken.

Fig.1

## Doppelkreuzgelenk

=================

Die Erfindung betrifft ein Doppelkreuzgelenk mit einer Antriebsgelenkgabel, einer gleichartig ausgebildeten Abtriebsgelenkgabel und zwischen den Gelenkgabeln angeordneten Verbindungselementen.

Einfache Kreuzgelenke (Kardangelenke) übertragen die Drehbewegung beim Auftreten eines Winkels zwischen Antriebswelle und Abtriebswelle nicht gleichförmig. Eine gleichförmige Drehbewegung läßt sich zwar unter bestimmten Bedingungen mit einem Doppelkreuzgelenk mit Zwischenwelle erreichen. Aber auch bei einem solchen Doppelkreuzgelenk lassen sich Drehschwingungen der Zwischenwelle nicht vermeiden, was sowohl für die Gelenke als auch für die angetriebene Maschine eine schwere Belastung und somit eine verminderte Lebensdauer und einen geräuschvollen Betrieb bedeutet.

Nach dem Stande der Technik (DE-OS 22 13 765, US-PS 3 456 458 und DE-OS 28 5o 3o1) hat es nicht an Versuchen gefehlt, die Zwischenwelle zwischen den Kreuzgelenken in Fortfall zu bringen und die beiden Kreuzgelenke im Bereich des Schnittpunktes von Antriebsachse und Abtriebsachse zu einem einzigen Gelenk zu vereinigen. Diese Versuche waren jedoch insofern erfolglos, als eine vollständig homokinetische Funktion nicht erreicht werden konnte.

Es ist Aufgabe der Erfindung, ein Doppelkreuzgelenk zu schaffen, dessen Gelenkteile im Bereich des Schnittpunktes von Antriebs- und Abtriebsachse vereinigt sind und welches gleichzeitig eine vollständig homokinetische Funktion hat. Außerdem soll das Doppelkreuzgelenk durch Massenkräfte verursachte Drehschwingungen vermeiden.

Gegenstand der Erfindung ist ein Doppelkreuzgelenk gemäß dem Patentanspruch 1. Dieses Doppelkreuzgelenk besteht aus zwei Kreuzgelenksystemen, die übereinander radial nach außen in derselben Ebene angeordnet sind und untereinander zwischen der Antriebs- und Abtriebsgelenkgabel durch Zwischenglieder verbunden sind. Dabei hat das Doppelkreuzgelenksystem sowohl antriebsseitig als auch abtriebsseitig den gleichen Aufbau um $90^{\circ}$ gegeneinander verdreht. Demzufolge hat das Doppelkreuzgelenk gemäß der Erfindung eine vollständig homokinetische Funktion und keine Zwischenglieder, die Drehschwingungen unterworfen sind. Außerdem hat es einen sehr einfachen Aufbau. Ein besonderer Vorzug liegt noch darin, daß das Doppelkreuzgelenk gemäß der Erfindung ohne weiteres Axialkräfte in beiden Richtungen zwischen Antriebswelle und Abtriebswelle übertragen kann, weil beide Kreuzgelenke praktisch in ein und derselben Ebene liegen. Schließlich ist das Doppelkreuzgelenk gemäß der Erfindung in axialer Richtung besonders kurz bauend.

Vorteilhafte Ausgestaltungen des Doppelkreuzgelenkes gemäß der Erfindung ergeben sich aus den Unteransprüchen 3 bis 27.

Aufgabe der Erfindung ist es weiterhin, ein Doppelkreuzgelenk zu schaffen, welches gegenüber dem Doppelkreuzgelenk gemäß Patentanspruch 1 bei gleichem Durchmesseraufbau das doppelte Drehmoment übertragen kann. Außerdem soll auch dieses Doppelkreuzgelenk die Ausbildung von durch Massenkräfte verursachten Drehschwingungen vermeiden. Gegenstand der Erfindung ist weiterhin das Doppelkreuzgelenk gemäß Patentanspruch 28.

Dieses alternative Doppelkreuzgelenk gemäß der Erfindung enthält die gleichen Zwischenglieder, wie das eingangs erläuterte Doppelkreuzgelenk gemäß der Erfindung und gestattet auf diese Weise eine Übertragung des Drehmomentes über jeweils vier Gelenkbolzen, so daß praktisch das doppelte Drehmoment übertragen werden kann. Bei diesem alternativen Doppelkreuzgelenk werden die beiden zwischenliegenden doppelseitigen Gelenkgabeln zwar nicht homokinetisch angetrieben, aber die Ungleichförmigkeit der Drehbewegungen dieser beiden doppelseitigen Gelenkgabeln wird an der Abtriebsseite vollständig kompensiert, so daß auch dieses Doppelkreuzgelenk insgesamt eine vollständig homokinetische Funktion hat. Gleichzeitig werden auch alle Massenkräfte kompensiert, weil die beiden doppelseitigen Gelenkgabeln infolge der Verdrehung um 9o$^0$ in jeder 18o$^0$-Phase gegenläufige Drehbewegungen ausführen.

Ausführungsbeispiele der Erfindung werden im folgenden an Hand der Zeichnung näher erläutert. Es zeigen:

Fig. 1    die wesentlichen Teile des Doppelkreuzgelenkes gemäß der Erfindung perspektivisch in einer Explosionsdarstellung

Fig. 2    einen Schnitt durch ein Doppelkreuzgelenk gemäß der Erfindung entlang der Linie C – D in Fig. 3

Fig. 3    einen Schnitt entlang der Linie A – B in Fig. 2

Fig. 4    einen Schnitt durch eines der Zwischenglieder in einer ersten Auführungsform entlang der Linie E – F in Fig. 5

0086864

4

Fig. 5    eine Seitenansicht eines der Zwischenglieder

Fig. 6    einen Schnitt durch eines der Zwischenglieder in einer zweiten Ausführungsform
entlang der Linie a - a in Fig. 7

Fig. 7    einen Schnitt entlang der Linie
e - e in Fig. 8

Fig. 8    einen Schnitt entlang der Linie
c - c in Fig. 7

Fig. 9    einen Schnitt durch das andere zur
zweiten Ausführungsform der Zwischenglieder gehörende zweite Zwischenglied
entlang der Linie f - f in Fig. 1o

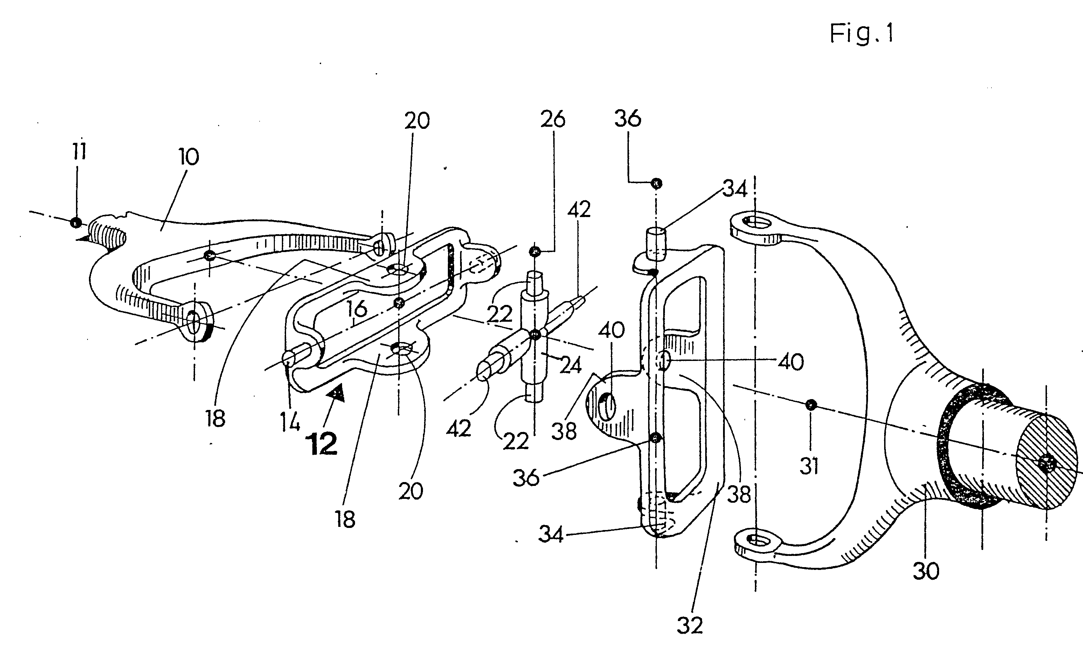

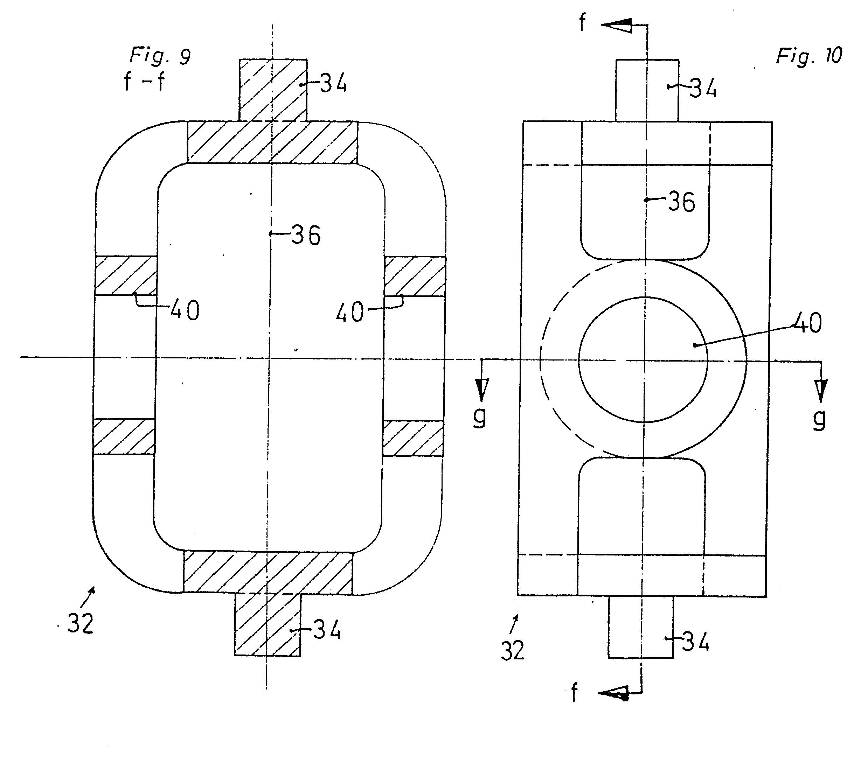

Fig. 1o   eine Seitenansicht des in Fig. 9
dargestellten Zwischengliedes

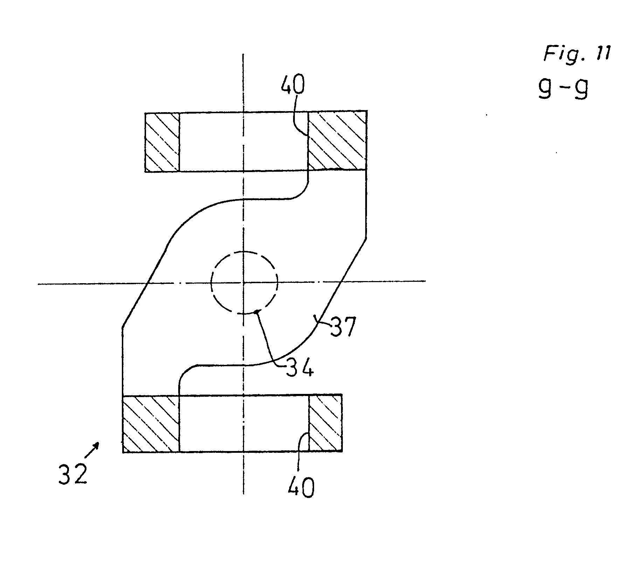

Fig. 11   einen Schnitt entlang der
Linie g - g in Fig. 1o

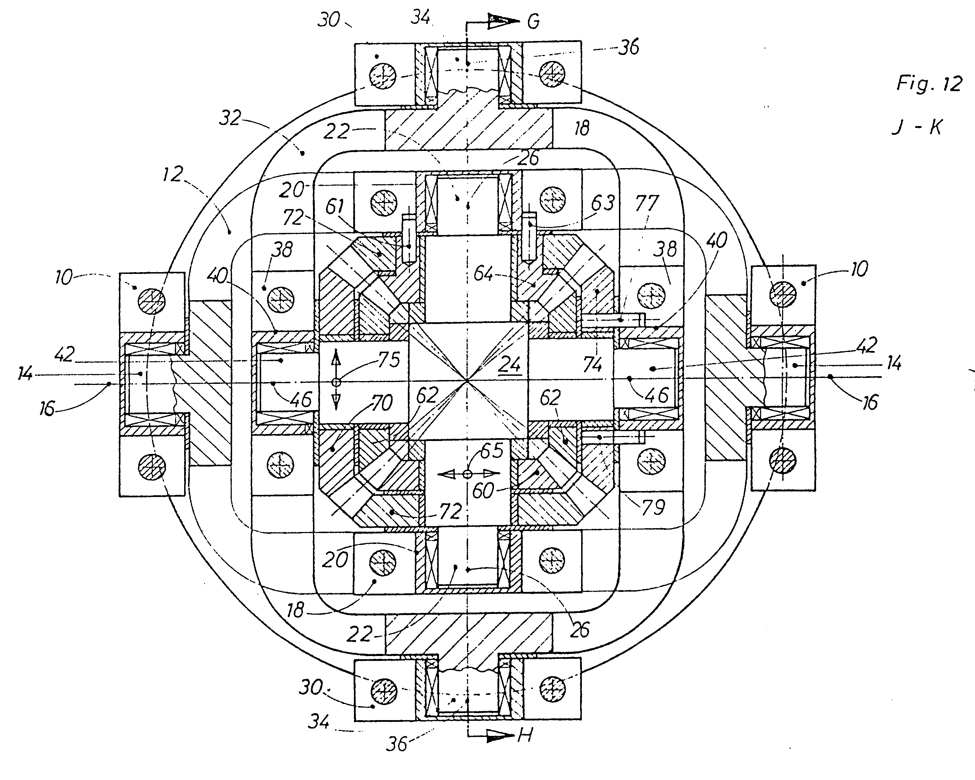

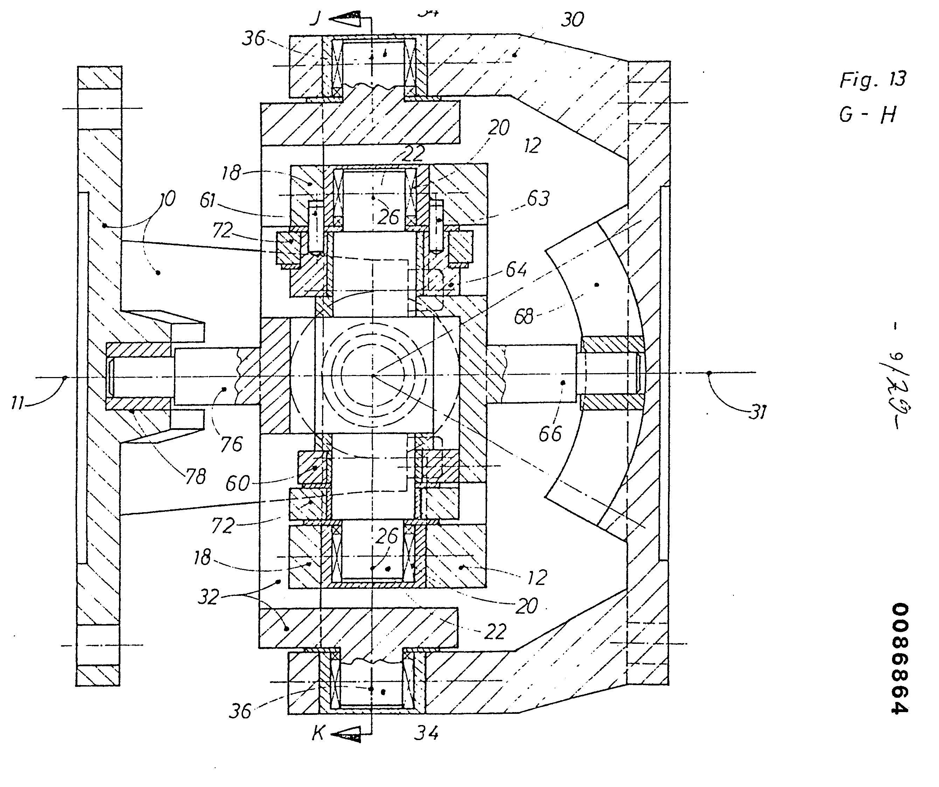

Fig. 12   einen Schnitt durch eine zweite Ausführungsform eines Doppelkreuzgelenkes
gemäß der Erfindung entlang der Linie
J - K in Fig. 13

Fig. 13   einen Schnitt entlang der Linie G - H
in Fig. 12

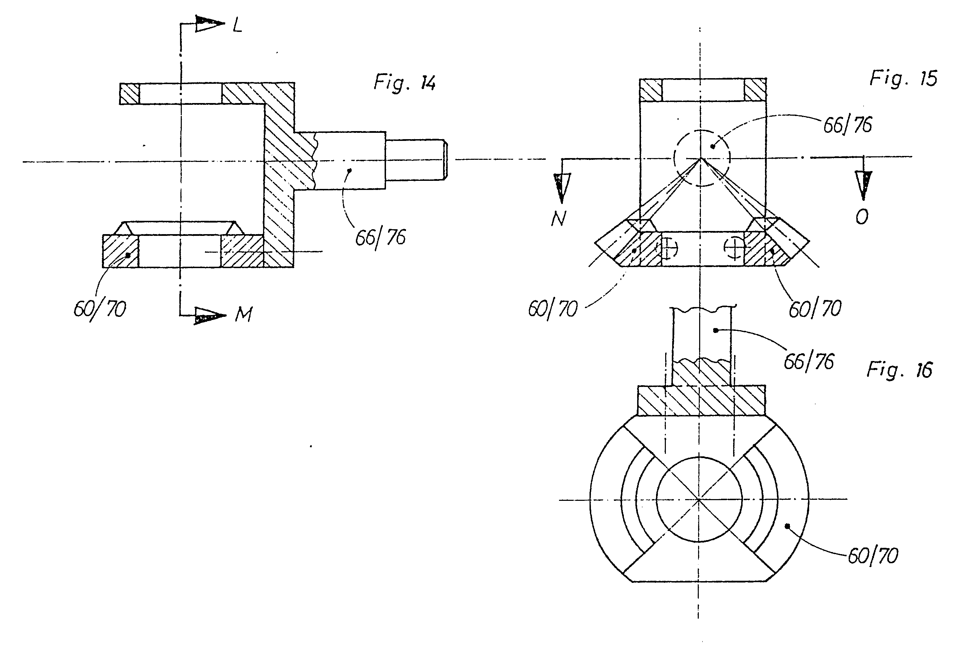

Fig. 14   einen Schnitt durch ein Kegelrad mit
angesetztem Verstellhebel

Fig. 15   einen Schnitt entlang der Linie L - M
in Fig. 14

Fig. 16    einen Schnitt entlang der Linie N – O
in Fig. 15

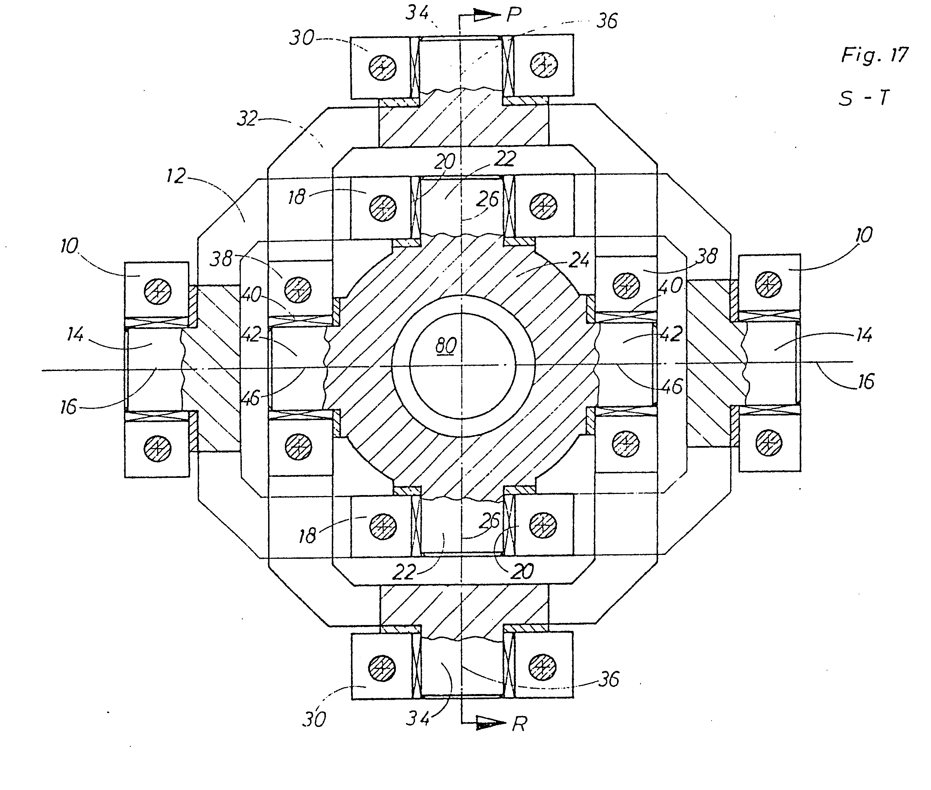

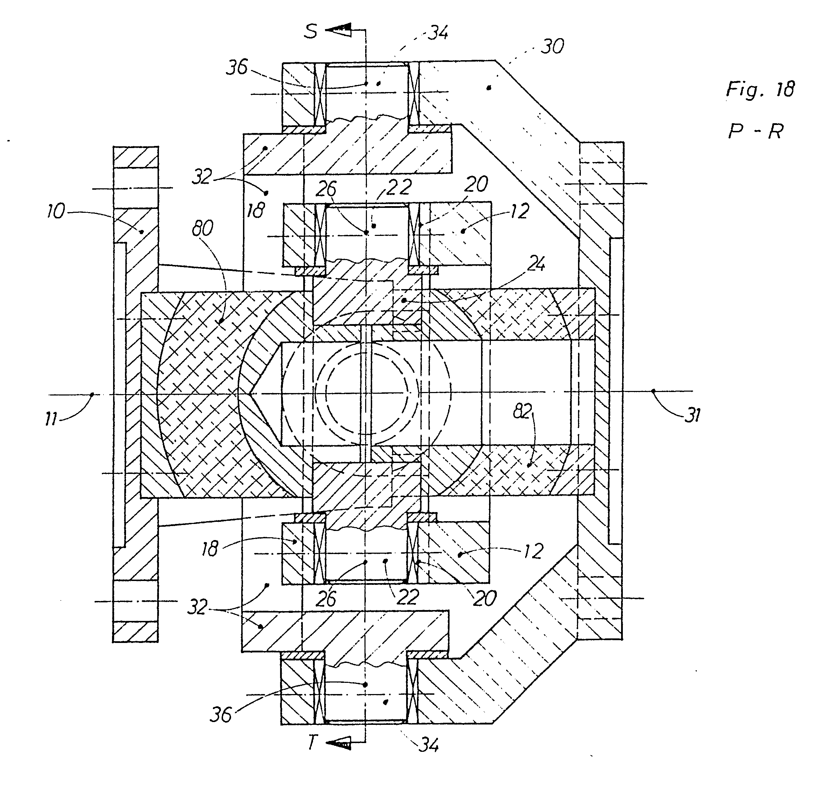

Fig. 17    einen Schnitt durch eine dritte Ausführungsform eines Doppelkreuzgelenkes
gemäß der Erfindung entlang der
Linie S – T in Fig. 18

Fig. 18    einen Schnitt entlang der Linie P – R
in Fig. 17

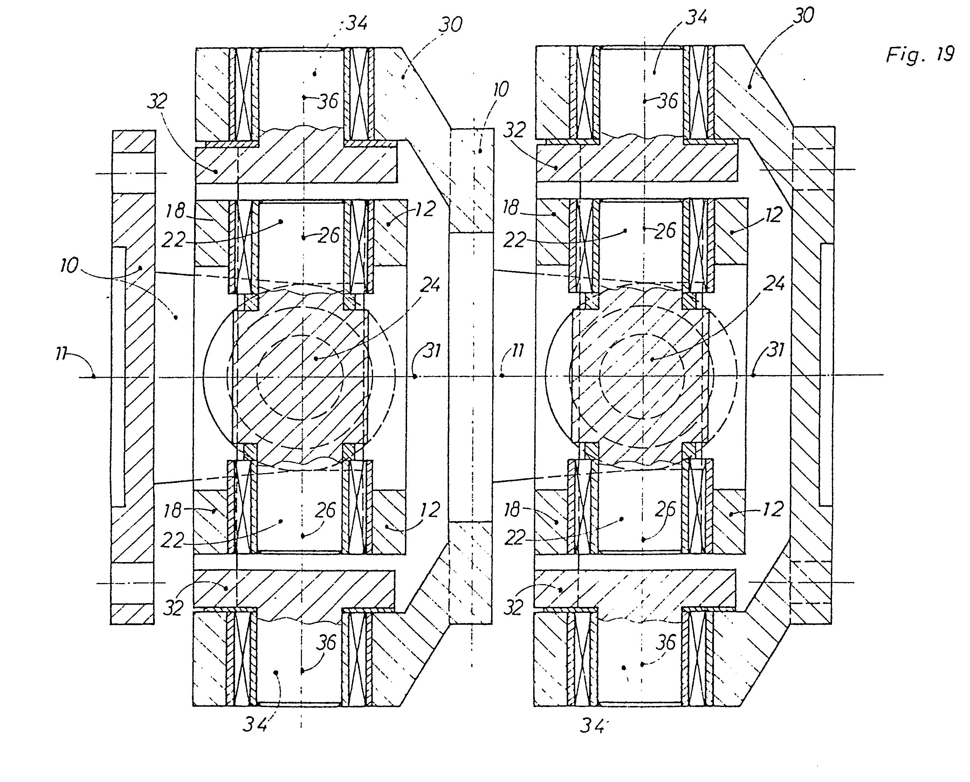

Fig. 19    einen Längsschnitt durch zwei hintereinander geschaltete Doppelkreuzgelenke gemäß der Erfindung

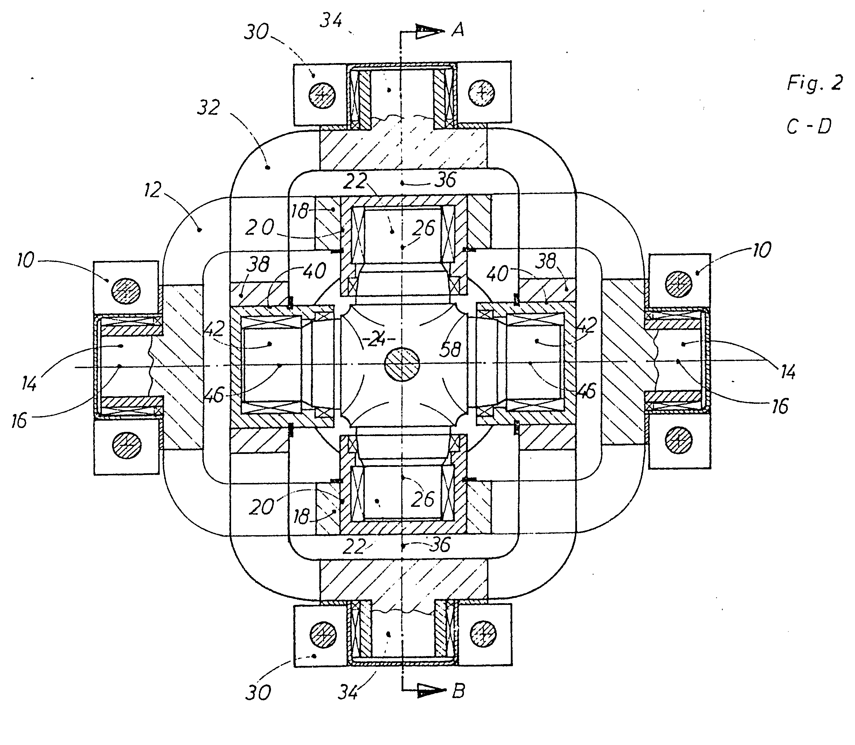

Fig. 2o    einen axialen Längsschnitt durch ein
alternatives Doppelkreuzgelenk für die
doppelte Drehmomentübertragung

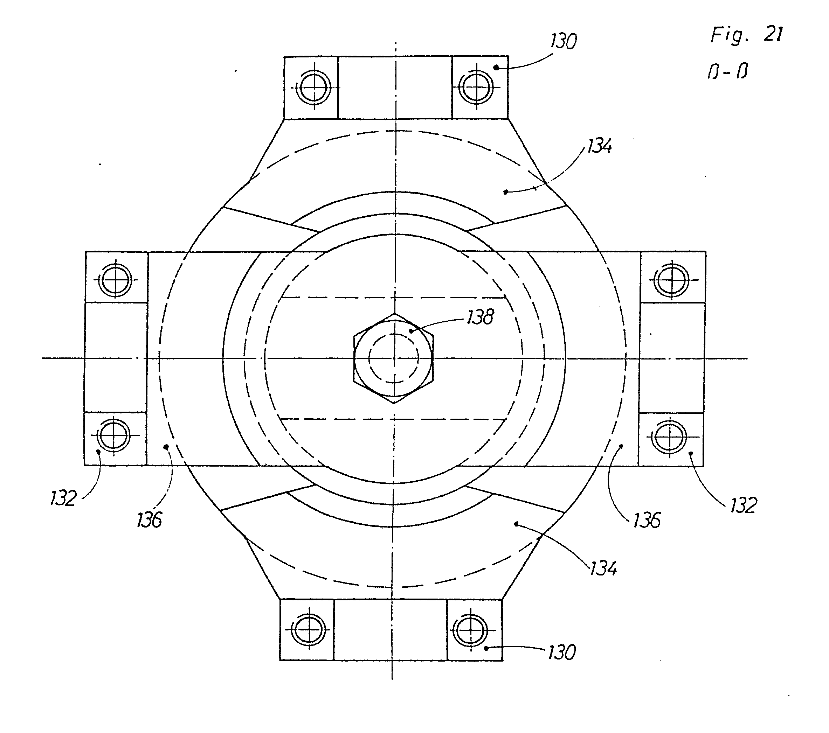

Fig. 21    eine Ansicht der beiden doppelseitigen
Gelenkgabeln entlang der Linie ß – ß
in Fig. 2o unter Fortlassung der innenliegenden Gelenkteile

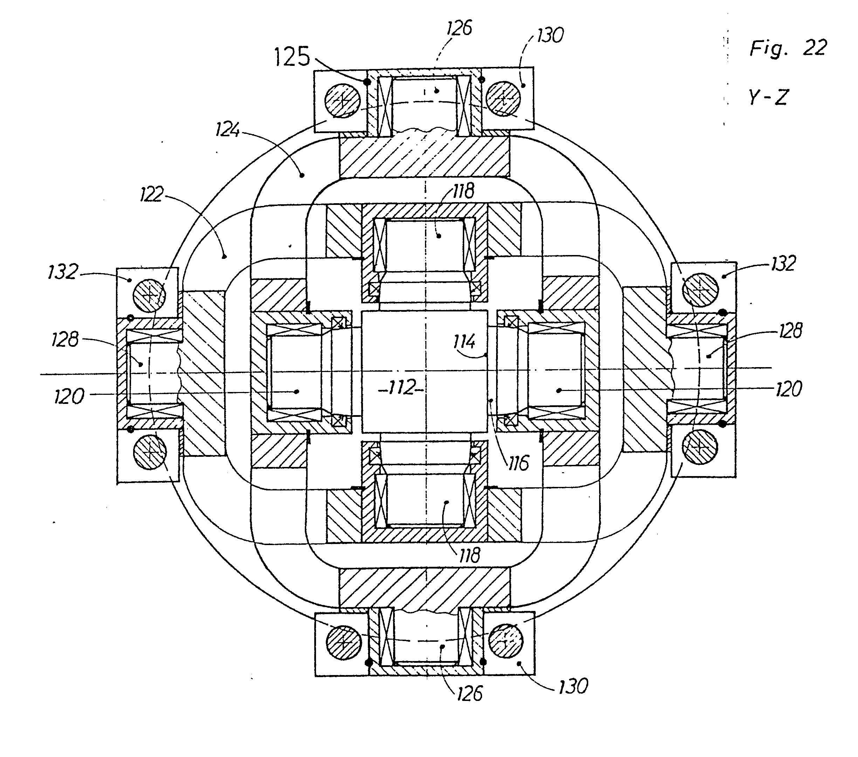

Fig. 22    einen Schnitt entlang der Linie Y – Z
in Fig. 21

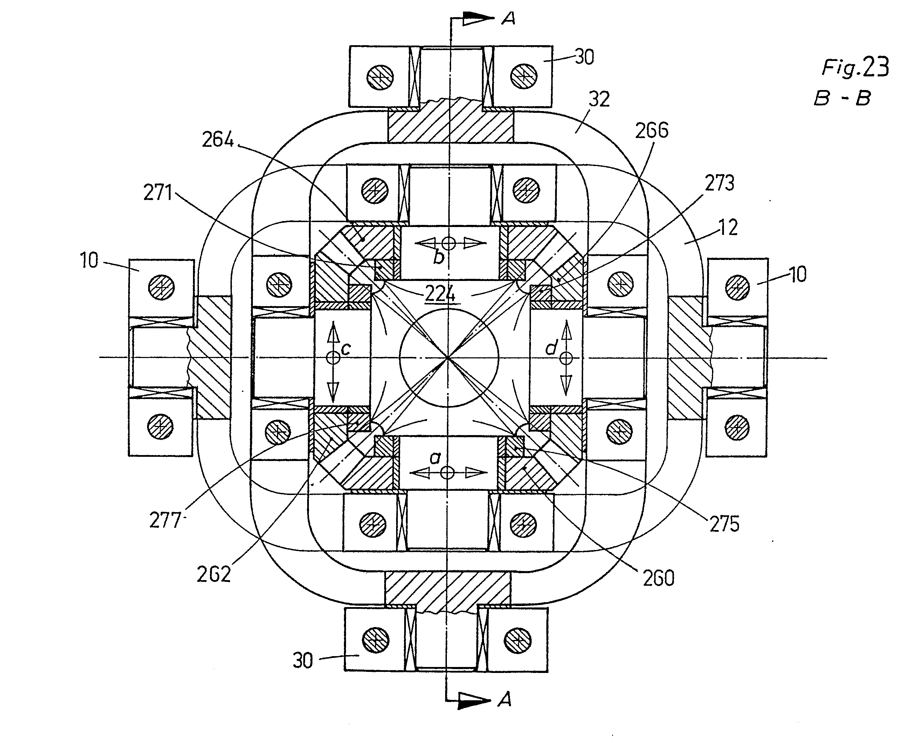

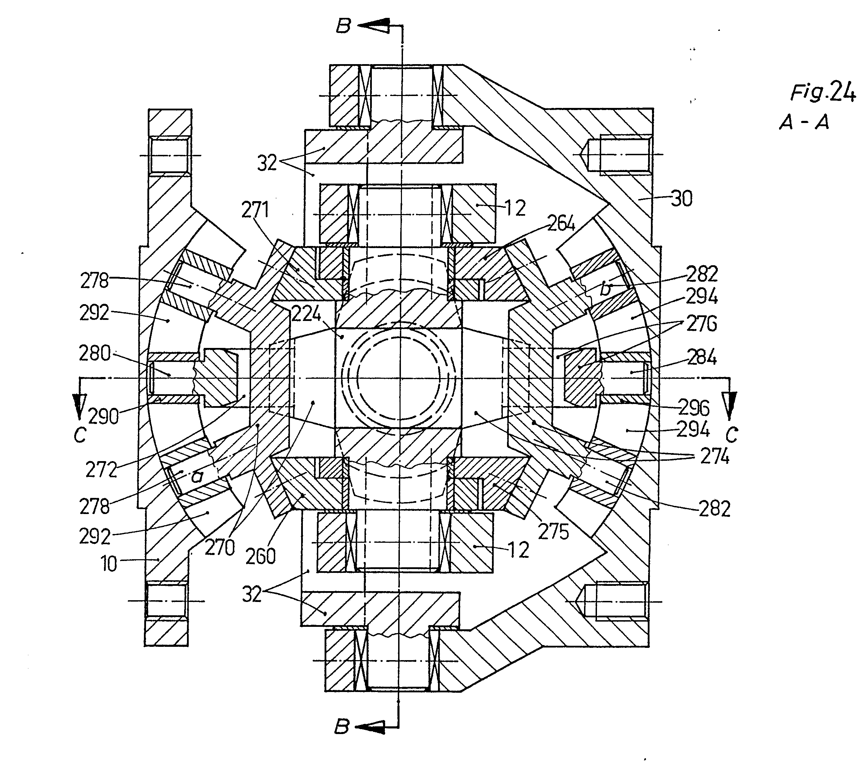

Fig. 23    einen Schnitt durch eine vierte Ausführungsform eines Doppelkreuzgelenkes
gemäß der Erfindung entlang der Linie
B – B in Fig. 24

Fig. 24    einen Schnitt entlang der Linie A – A
in Fig. 23

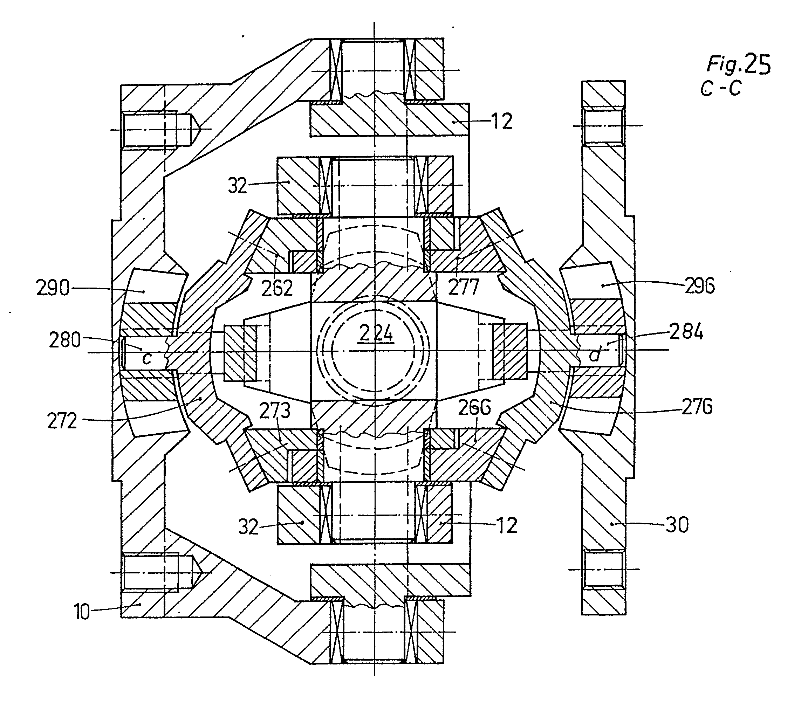

Fig. 25  einen Schnitt entlang der Linie C - C in
        Fig. 24

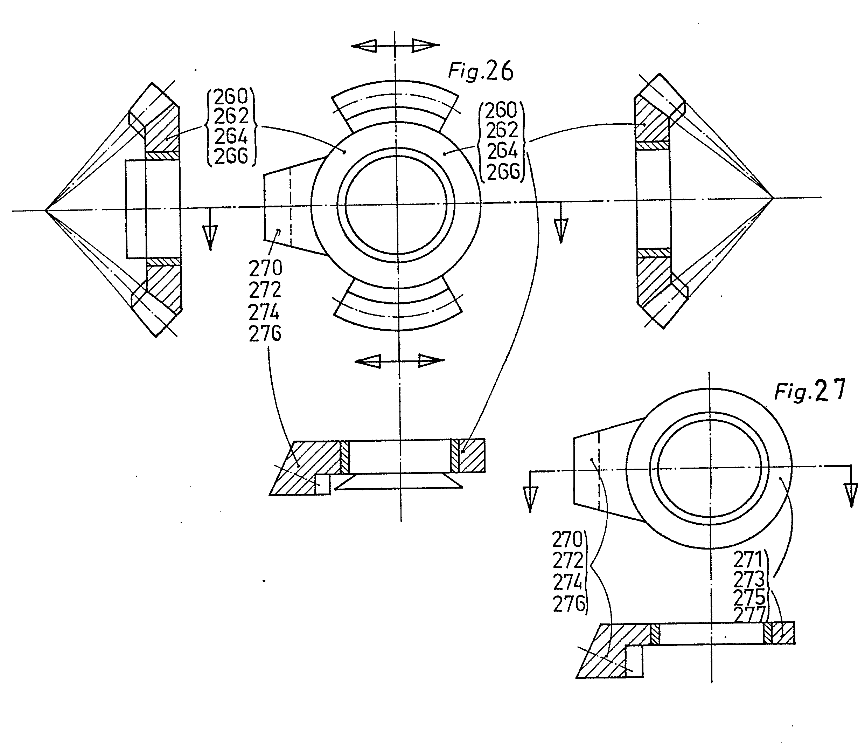

Fig. 26  eine Ansicht und drei Schnitte eines
        Kegelrades des Doppelkreuzgelenkes
        gemäß Fig. 23

Fig. 27  eine Ansicht und einen Schnitt eines
        Stützringes des Doppelkreuzgelenkes
        gemäß Fig. 23

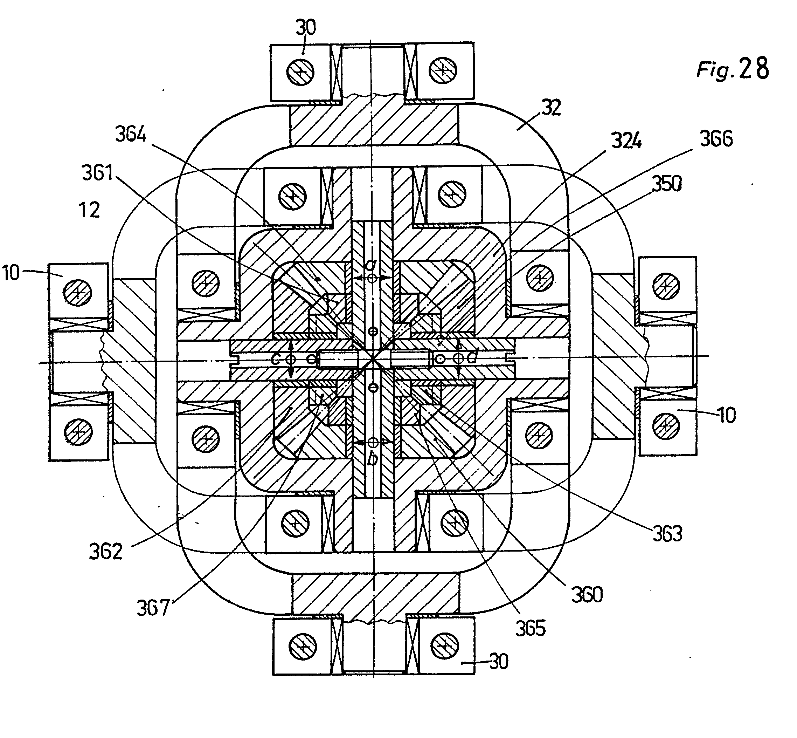

Fig. 28  einen Schnitt durch eine fünfte Ausführungsform eines Doppelkreuzgelenkes
        gemäß der Erfindung

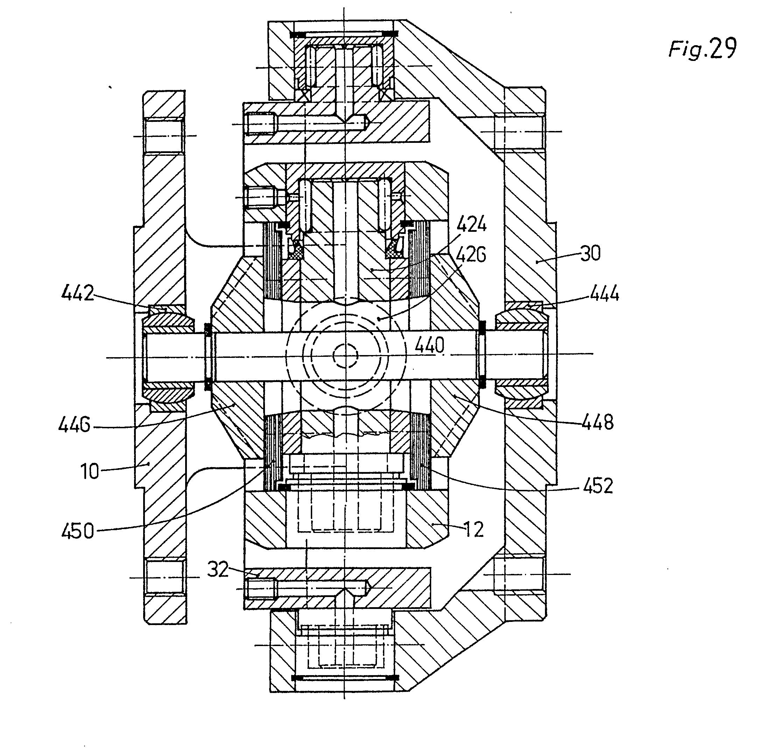

Fig. 29  einen Schnitt durch ein Doppelkreuzgelenk
        gemäß der Erfindung in einer sechsten
        Ausführungsform

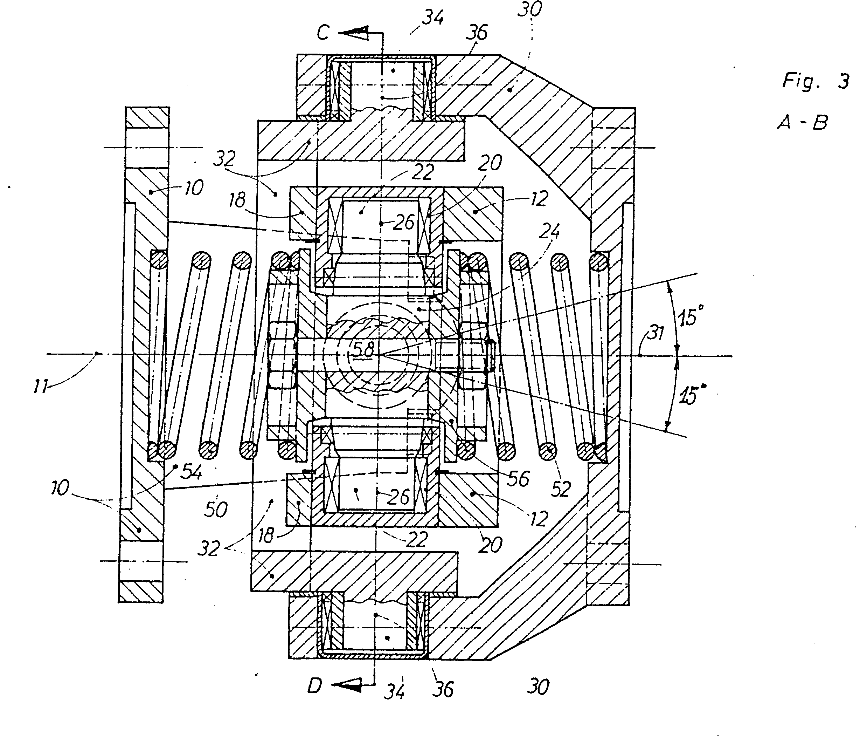

Fig. 3o  einen Schnitt durch ein der Fig. 29 ent-
        sprechendes Doppelkreuzgelenk in abge-
        winkelter Stellung, wobei der Deutlich-
        keit wegen die Zwischenglieder wegge-
        lassen sind

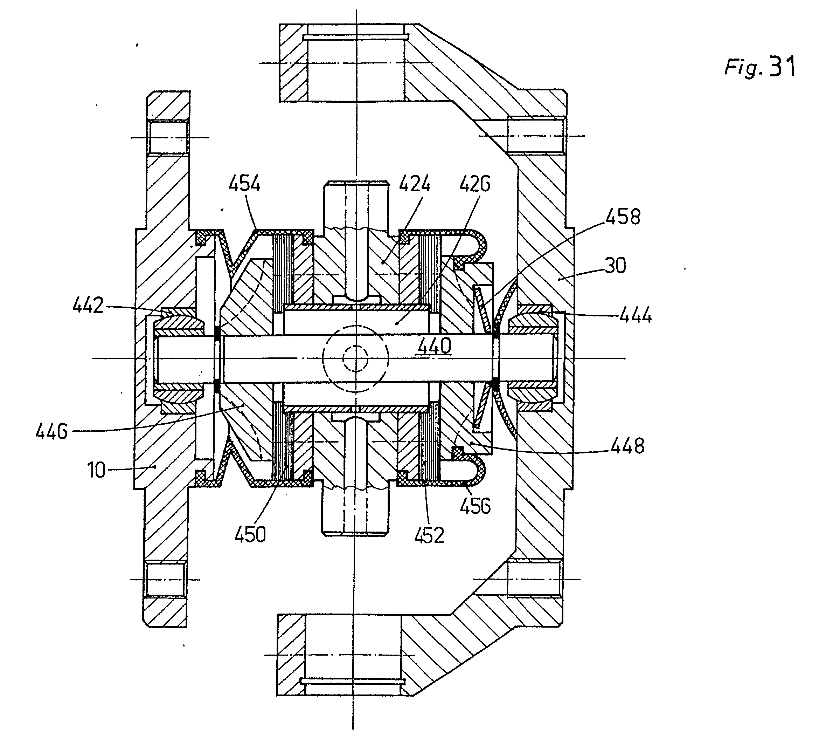

Fig. 31  einen Schnitt durch ein der Fig. 29 ent-
        sprechendes Doppelkreuzgelenk in abge-
        wandelter Ausführungsform

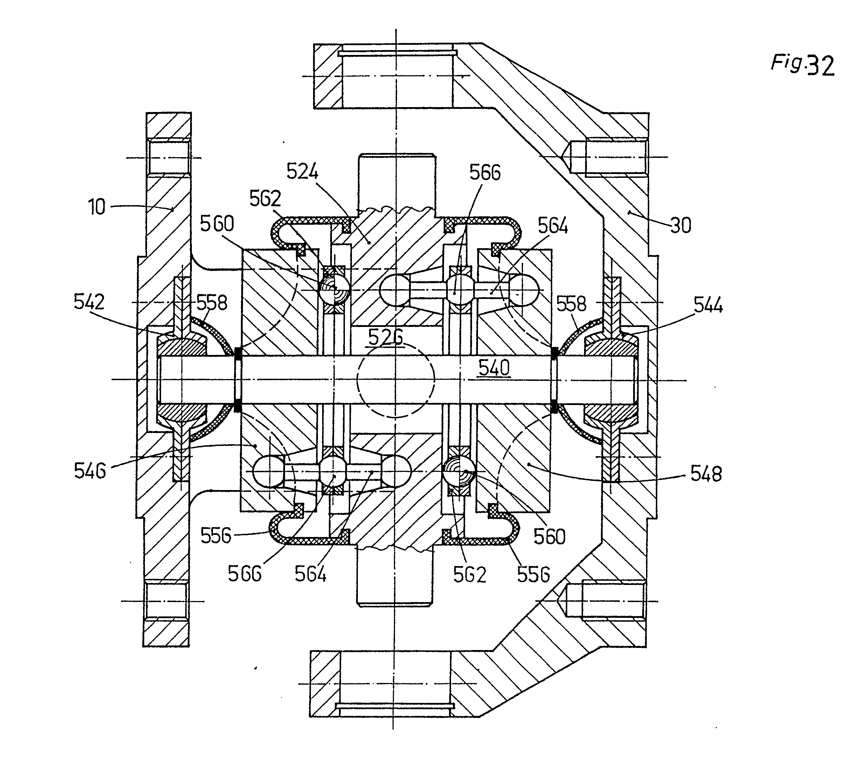

Fig. 32  einen Schnitt durch ein Doppelkreuzgelenk
        gemäß der Erfindung in einer siebenten
        Ausführungsform, wobei der Deutlichkeit
        wegen die Zwischenglieder weggelassen
        sind

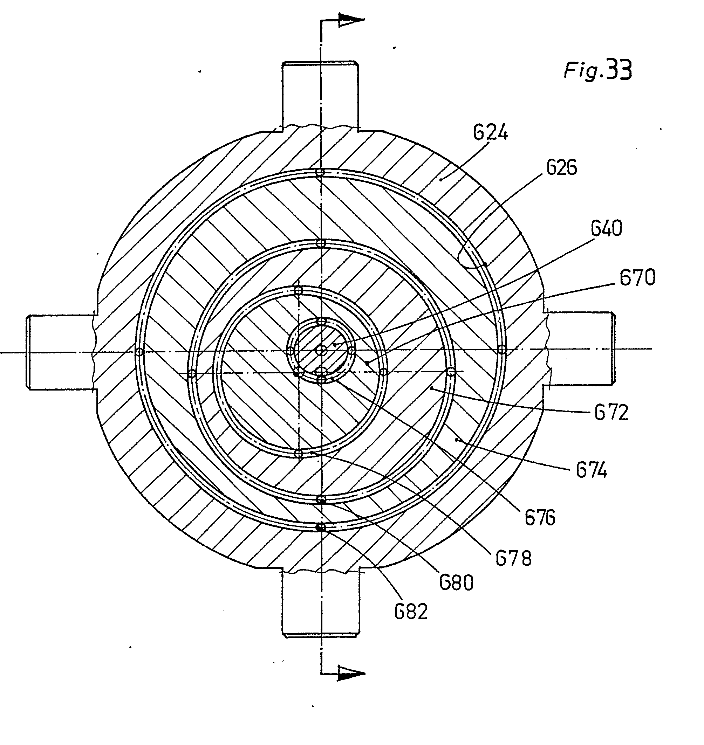

Fig. 33  einen Schnitt durch das Kreuzstück eines
        Doppelkreuzgelenkes gemäß der Erfindung
        in einer achten Ausführungsform

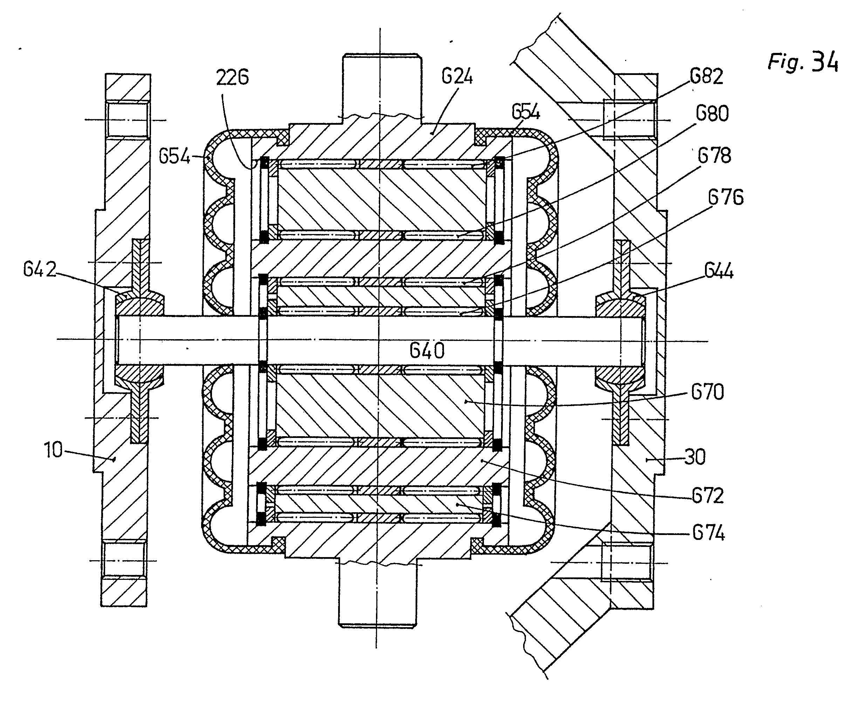

Fig. 34    einen Schnitt entlang der Linie A – A in
Fig. 33

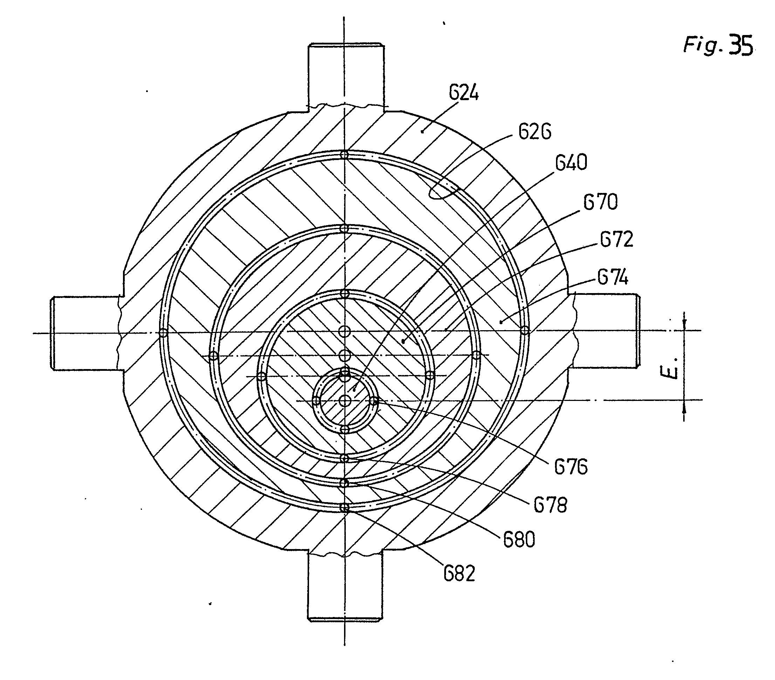

Fig. 35    einen Schnitt durch das in Fig. 33 gezeigte Kreuzstück bei maximaler Auslenkung der Führungsachse

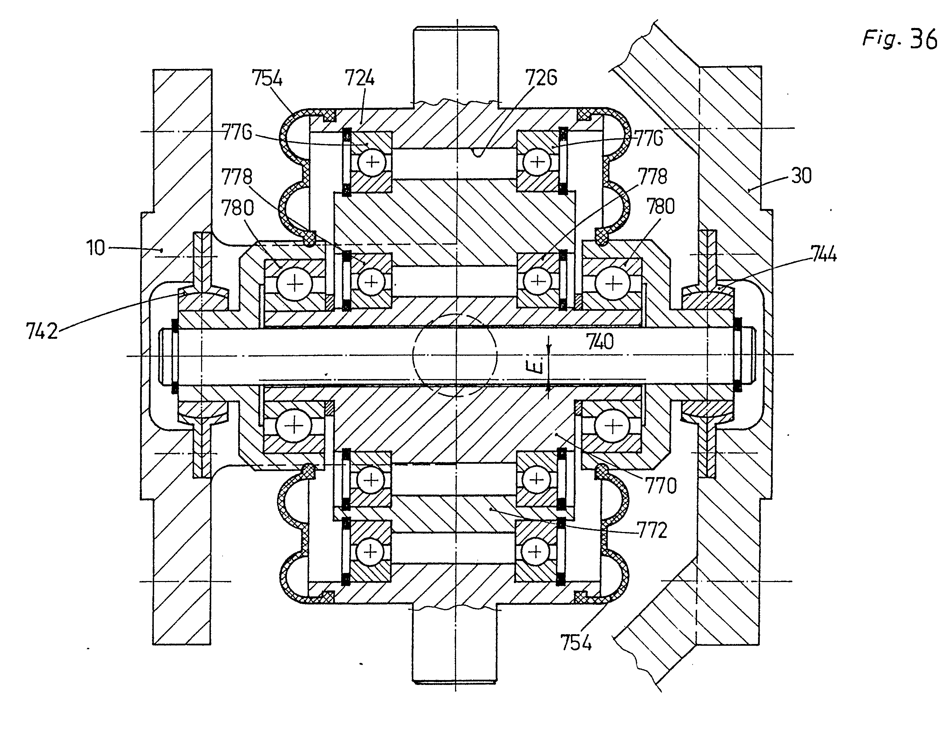

Fig. 36    einen Schnitt durch ein Doppelkreuzgelenk
gemäß der Erfindung in einer neunten
Ausführungsform, wobei der Deutlichkeit
wegen die Zwischenglieder weggelassen
sind.

In den Fig. 1 bis 3 ist die Antriebsgelenkgabel des Doppelkreuzgelenkes mit der Bezugszahl 1o bezeichnet. In der Antriebsgelenkgabel 1o ist ein Zwischenglied 12 mittels Lagerzapfen 14 um eine Schwenkachse 16 verschwenkbar gelagert.
Diese Schwenkachse 16 verläuft in der Ebene der Gelenkgabel
1o und senkrecht zu deren Drehachse 11. Das Zwischenglied
12 ist als länglicher Rechteckrahmen ausgebildet, an dessen
Schmalseiten die nach außen vorstehenden Lagerzapfen 14 angeordnet sind. An den Längsseiten des rechteckförmigen
Zwischengliedes 12 sind nach einer Seite vorstehende
Konsolen 18 angeordnet, die mit Lagerbohrungen 2o zur Aufnahme von Lagerzapfen 22 versehen sind, die sich an zwei
diametral gegenüberliegenden Enden eines Kreuzstückes 24
befinden. Das von den Lagerbohrungen 2o und den Lagerzapfen 22 gebildete Gelenk weist eine Schwenkachse 22 auf,
die senkrecht zur Schwenkachse 16 der Antriebsgelenkgabel 1o
verläuft und diese schneidet.

Abtriebsseitig ist das Doppelkreuzgelenk praktisch ebenso
aufgebaut, wie antriebsseitig, jedoch um 9o° um die Drehachse verdreht. In der Abtriebsgelenkgabel 3o, ist ein
Zwischenglied 32 mittels Lagerzapfen 34 um eine Schwenkachse
36 verschwenkbar gelagert. Diese Schwenkachse 36 verläuft in der Ebene der Gelenkgabel 3o und senkrecht zu deren Drehachse 31. Das Zwischenglied 32 ist als länglicher Rechteckrahmen ausgebildet, an dessen Schmalseiten die nach außen vorstehenden Lagerzapfen 34 angeordnet sind. An den Längsseiten des rechteckförmigen Zwischengliedes 32 sind nach einer Seite vorstehende Konsolen 38 angeordnet, die mit Lagerbohrungen 4o zur Aufnahme von Lagerzapfen 42 versehen sind, die sich an den beiden anderen diametral gegenüberliegenden Enden des Kreuzstückes 24 befinden. Das von den Lagerbohrungen 4o und den Lagerzapfen 42 gebildete Gelenk weist eine Schwenkachse 46 auf, die senkrecht zur Schwenkachse 36 der Abtriebsgelenkgabel 3o verläuft und diese schneidet.

Wie sich aus der vorstehenden Beschreibung ergibt, sind die beiden Gelenkgabeln 1o und 3o sowie die beiden Zwischenglieder 12 und 32 vollständig identisch ausgebildet. Außerdem liegen die Schwenkachsen 16 und 46 sowie die Schwenkachsen 26 und 36 jeweils auf einer Linie. Schließlich verlaufen alle Schwenkachsen in ein und derselben Ebene und schneiden sich im Mittelpunkt des Kreuzstückes 24. Aufgrund der geschilderten Symmetrieeigenschaften hat das erläuterte Doppelkreuzgelenk eine vollständig homokinetische Funktion, da sich die ungleichförmigen Drehbewegungen des Kreuzstückes 24 aufgrund der Funktion der Zwischenglieder vollständig kompensieren.

Da die Lage des Kreuzstückes 24 aufgrund der beidseitig doppelgelenkigen Lagerung an den Gelenkgabeln 1o und 3o unstabil ist, muß die Lage des Kreuzstückes 24 relativ zu den Gelenkgabeln 1o und 3o zusätzlich stabilisiert werden. Dies kann beispielsweise durch zwei Schraubenfedern 5o und 52 erfolgen, wie sie in Fig. 3 dargestellt sind. Diese Schraubenfedern 5o und 52 sind mittels Befestigungsplatten 54 und 56 und einer Befestigungsschraube 58 an dem Kreuzstück 24 befestigt und stützen sich jeweils im Gabelgrund der gegen-überliegenden Gelenkgabel 1o bzw. 3o ab.

Hierdurch wird die Ebene des Zwischenstückes 24 stets in der Winkelhalbierenden zwischen der Antriebsachse 11 und der Abtriebsachse 31 gehalten.

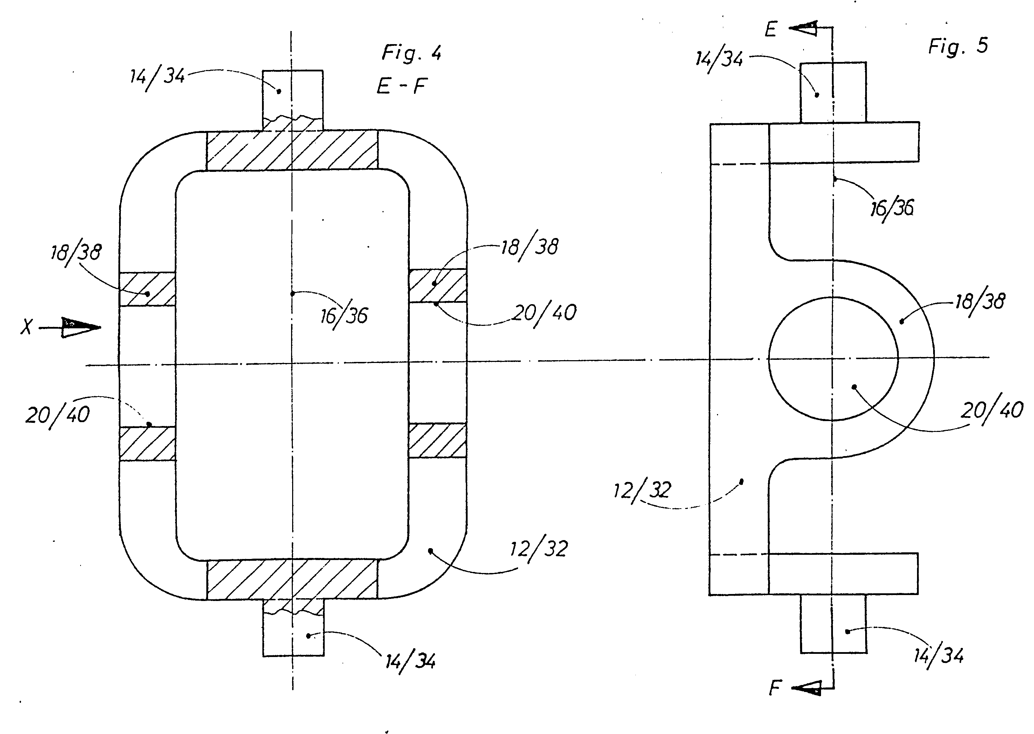

Die Fig. 4 und 5 zeigen die auch aus Fig. 1 hervorgehende erste Ausführungsform der Zwischenglieder 12 bzw. 32, die vollständig identisch ausgebildet sind.

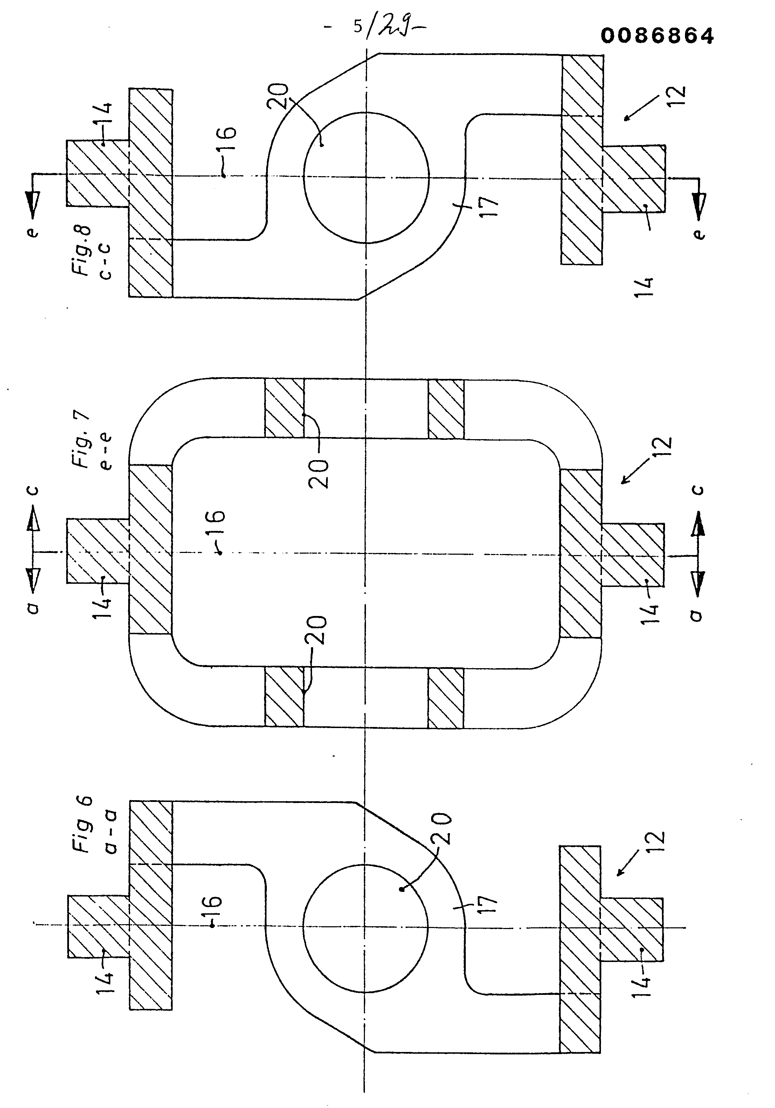

Aus den Fig. 6 bis 11 geht eine zweite Ausführungsform der Zwischenglieder 12 bzw. 32 hervor, wobei hier beide Zwischenglieder unterschiedlich ausgebildet sind. Das aus den Fig. 6 bis 8 hervorgehende erste Zwischenglied dieser zweiten Ausführungsform hat ebenfalls die Form eines länglichen Rechteckrahmens, an dessen beiden Schmalseiten die Lagerzapfen 14 angeordnet sind. Die beiden Längsseiten des Rechteckrahmens sind nach einer Seite hin abgekröpft und weisen im Bereich dieser Abkröpfung 17 die Lagerbohrungen 2o auf. Das zu diesem in den Fig. 6 bis 8 dargestellten Zwischenglied passende zweite Zwischenglied ist in den Fig. 9 bis 11 dargestellt. Auch dieses Zwischenglied hat die Form eines Rechteckrahmens mit Lagerzapfen 34 an den Schmalseiten und Lagerbohrungen 4o in den Längsseiten, wobei hier die Schmalseiten des Rechteckrahmens eine der Abkröpfung 17 entsprechende Abkröpfung 37 aufweisen und im Bereich dieser Abkröpfung 37 die Lagerzapfen 34 angeordnet sind. Bei Verwendung der aus den Fig. 6 bis 11 hervorgehenden zweiten Ausführungsform der Zwischenglieder werden auf besonders vorteilhafte Weise Torsionsbelastungen der Zwischenglieder vermieden, so daß ein derart ausgebildetes Doppelkreuzgelenk insbesondere für die Übertragung hoher Drehmomente geeignet ist.

Die in den Fig. 12 bis 16 dargestellte Ausführungsform des Doppelgelenkes entspricht in ihrem Grundaufbau der an Hand der Fig. 1 bis 5 erläuterten Ausführungsform, so daß für die einander entsprechenden Teile die gleichen Bezugszahlen verwendet werden konnten.

In Abweichung vom Ausführungsbeispiel der Fig. 1 bis 5 sind hier auf den Armen des Kreuzstückes 24 Kegelräder gelagert, die dazu dienen, die Ebene des Kreuzstückes 24 auf der Winkelhalbierenden zwischen der Antriebsachse 11 und der Abtriebsachse 31 der Gelenkgabeln 1o und 3o zu halten. Hierzu ist auf den Armen des Kreuzstückes 24 ein innerer Satz von zusammenwirkenden Kegelrädern 6o, 62 und 64 sowie ein äußerer zusammenwirkender Satz von Kegelrädern 7o, 72 und 74 frei drehbar gelagert. Bei dem inneren Satz ist das Kegelrad 6o mit einem Verstellhebel 66 verbunden, der im Gabelgrund der Abtriebsgelenkgabel 3o in einer Führung 68 parallel zur Ebene dieser Gelenkgabel 3o geführt ist. Hierdurch verschwenkt sich der Verstellhebel 66 dann und nur dann, wenn sich die Abtriebsachse 31 und damit die Gelenkgabel 3o senkrecht zur Ebene dieser Gelenkgabel 3o verschwenkt.

Ähnlich ist beim äußeren Satz das Kegelrad 7o mit einem Verstellhebel 76 verbunden, der im Gabelgrund der Antriebsgabel 1o in einer Führung 78 parallel zur Ebene dieser Gelenkgabel 1o geführt ist. Hierdurch verschwenkt sich der Verstellhebel 76 dann und nur dann, wenn sich die Antriebsachse 11 und damit die Gelenkgabel 1o senkrecht zur Ebene dieser Gelenkgabel 1o verschwenkt.

Bei dem inneren Satz von Kegelrädern 6o, 62 und 64 ist das Kegelrad 64 drehfest mit dem Zwischenstück 12 verbunden, welches schwenkbar in der Antriebsgelenkgabel 1o gelagert ist. Ähnlich ist bei dem äußeren Satz von Kegelrädern 7o, 72 und 74 das Kegelrad 74 drehfest mit dem Zwischenstück 32 verbunden, welches schwenkbar in der Abtriebsgelenkgabel 3o gelagert ist.

Die Kegelräder sind gegebenenfalls dem maximalen Schwenkwinkel entsprechend nur als Kegelradsegment ausgebildet (siehe Fig. 16).

Die Einstellung der Ebene des Kreuzstückes 24 auf die jeweilige Winkelhalbierende zwischen der Antriebsachse 11 und der Abtriebsachse 31 funktioniert wie folgt:

Verschwenkt sich beispielsweise in Fig. 13 die Abtriebsachse 31 senkrecht zur Papierebene, während die Antriebsachse 11 ihre Lage beibehält, so verdreht der Verstellhebel 66 das zugehörige Kegelrad 6o entsprechend. Dieser Vorgang ist in Fig. 12 durch einen Doppelpfeil 65 veranschaulicht. Das Kegelrad 6o verdreht die beiden mit ihm kämmenden Kegelräder 62 entsprechend, die ihrerseits an dem drehfest mit dem Zwischenstück 12 verbundenen Kegelrad 64 abrollen, welches sich nicht verdrehen kann. Hierdurch verdrehen die beiden Kegelräder 62 das Kreuzstück 24 um die Schwenkachse 26 und zwar um den halben Winkelbetrag, um den gleichzeitig das Kegelrad 6o verdreht wird.

Verschwenkt sich in Fig. 13 demgegenüber die Antriebsachse 11 in der Papierebene, so verdreht der Verstellhebel 76 das Kegelrad 7o des äußeren Satzes, wie in Fig. 12 durch den Doppelpfeil 75 angedeutet ist. Das Kegelrad 7o verdreht die beiden mit ihr kämmenden Kegelräder 72 entsprechend, die ihrerseits an dem drehfest mit dem Zwischenstück 32 verbundenen Kegelrad 74 abrollen, welches sich nicht verdrehen kann. Hierdurch verdrehen die beiden Kegelräder 72 das Kreuzstück 24 um die Schwenkachse 46 um den halben Winkelbetrag, um den gleichzeitig das Kegelrad 7o verdreht wird. Dementsprechend wird das Kreuzstück 24 stets in der Winkelhalbierenden zwischen Antriebsachse 11 und Abtriebsachse 31 gehalten.

Das Ausführungsbeispiel gemäß den Fig. 17 und 18 entspricht weitestgehend dem Ausführungsbeispiel der Fig. 1 bis 5, so daß die einander entsprechenden Teile mit den gleichen Bezugszahlen bezeichnet werden konnten. In Abweichung vom Ausführungsbeispiel der Fig. 1 bis 5 ist hier das Kreuzstück 24 mittig mit einer Ausnehmung 8o für den Durchtritt einer Antriebswelle, von Schaltgestänge, Schmiermittelleitungen oder dergleichen versehen. Außerdem sind hier die das Kreuzstück 24 stabilisierenden Elemente als Gummifedern 82 und 84 ausgebildet, welche die gleiche Funktion haben, wie die oben an Hand von Fig. 3 erläuterten Schraubenfedern 5o und 52.

Fig. 19 veranschaulicht die Hintereinanderschaltung von zwei Doppelkreuzgelenken gemäß der Erfindung. Da der Aufbau der beiden verwendeten Gelenke dem Aufbau des an Hand der Fig. 1 bis 5 erläuterten Doppelkreuzgelenkes entspricht, sind in Fig. 19 die gleichen Bezugszeichen verwendet worden. In Abweichung vom Ausführungsbeispiel der Fig. 1 bis 5 sind hier jedoch sämtliche Schwenklager als vulkanisierte Gummilager ausgebildet, die sich von selbst in die Ursprungslage zurückstellen, so daß hier Führungselemente für Kreuzstücke 24 überflüssig sind. Die dargestellte Hintereinanderschaltung von Doppelkreuzgelenken gemäß der Erfindung hat den Vorteil, daß neben einem Winkelversatz zwischen Antriebs- und Abtriebsachse auch ein Radialversatz der beiden Achsen ohne wesentlichen Widerstand ausgeglichen werden kann, und dies bei vollständig homokinetischer Funktion und ohne daß der zwischen beiden Gelenken liegende Abschnitt in Drehschwingungen versetzt wird, wie dies bei herkömmlichen Kreuzgelenkwellen der Fall ist.

Das in den Fig. 2o, 21 und 22 dargestellte Doppelkreuzgelenk weist antriebsseitig einen Antriebsflansch 11o auf, der mit einem Anschlußstück 112 versehen ist, das antriebsseitig mit einem Antriebskreuzstück 114 verbunden ist. An den jeweils diametral gegenüberliegenden Gelenkzapfen 118 bzw. 12o (Fig. 22) des Antriebskreuzstückes 114 sind zwei Zwischenglieder 122 und 124 schwenkbar gelagert. Diese Zwischenglieder sind ebenso ausgebildet und angeordnet, wie die oben erläuterten Zwischenglieder 12 und 32 bei dem Doppelkreuzgelenk gemäß den Fig. 1 bis 5.

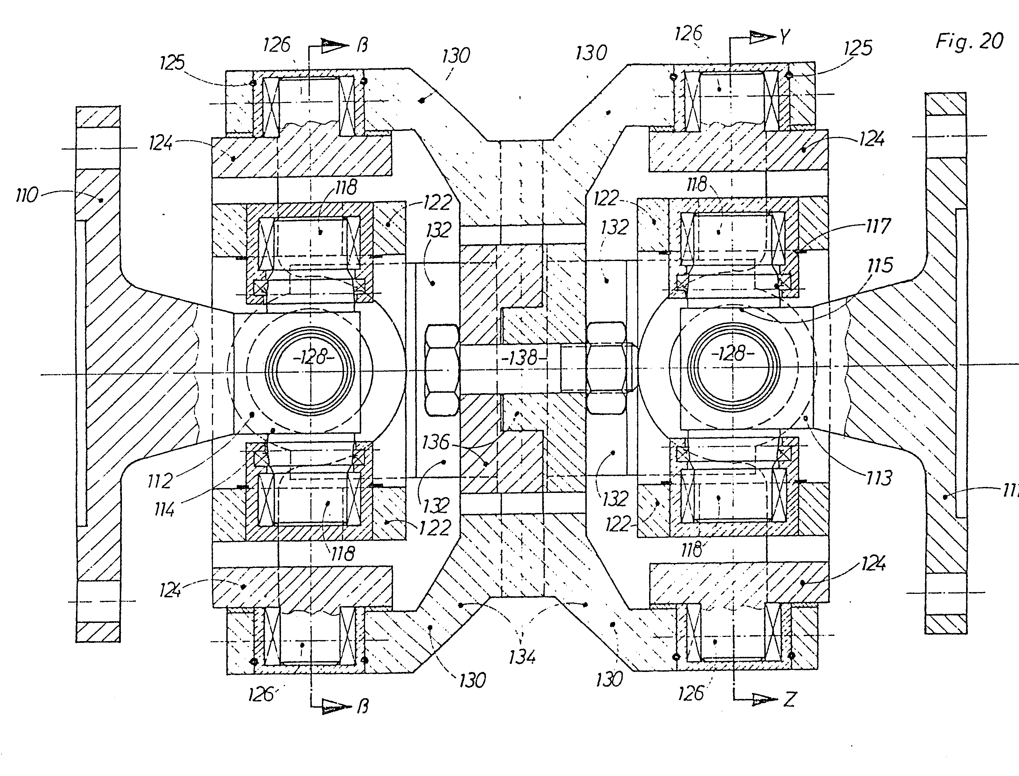

Die Zwischenglieder 122 und 124 sind mittels diametral gegenüberliegender Gelenkzapfen 126 und 128 (Fig. 22) in den
Gabelansätzen 13o und 132 von zwei doppelseitigen Gelenkgabeln 134 und 136 gelagert, derart, daß die Gelenkachsen
der Gelenkzapfen 126 und 128 der Zwischenglieder 122 und 124
mit den Gelenkachsen der Gelenkzapfen 118 bzw. 12o des Antriebskreuzstückes 114 zusammenfallen. Die doppelseitige
Gelenkgabel 136 ist aus Montagegründen zweiteilig ausgeführt,
wobei die beiden Teile mittig durch einen Schraubenbolzen 138
aneinander befestigt sind. Abtriebsseitig ist das Gelenk
gemäß den Fig. 2o bis 22 ebenso aufgebaut wie antriebsseitig. Die doppelseitigen Gelenkgabeln 134 und 136 sind auch
abtriebsseitig mit Gabelansätzen 13o und 132 versehen, in
denen zwei Zwischenglieder 122 und 124 um jeweils diametral
gegenüberliegende Gelenkzapfen 126 und 128 verschwenkbar
gelagert sind. An den Zwischengliedern 122 und 124 ist
– ebenso wie antriebsseitig – ein Abtriebskreuzstück 115
gelagert, welches unter Zwischenschaltung eines Anschlußstückes 113 mit dem Abtriebsflansch 111 verbunden ist.

Gegebenenfalls können einerseits der Antriebsflansch 11o, das
Anschlußstück 112 und das Antriebskreuzstück 114 sowie
andererseits der Abtriebsflansch 111, das Anschlußstück 113
sowie das Abtriebskreuzstück 115 einteilig ausgebildet sein.
Es ist aber auch möglich, daß die Anschlußstücke 112 bzw.
113 als Vierkante oder dergleichen ausgebildet sind, die in
entsprechende Öffnungen des Antriebskreuzstückes 114 bzw.
des Abtriebskreuzstückes 115 eingreifen.

Beim Gelenk gemäß den Fig. 2o bis 22 werden die beiden doppelseitigen Gelenkgabeln bei Auftreten eines Winkels zwischen
Antriebsachse und Abtriebsachse zwar antriebsseitig in
geringfügige Drehschwingungen versetzt, die aber abtriebsseitig wieder vollständig kompensiert werden, so daß das
Gelenk insgesamt eine vollständig homokinetische Funktion
hat. Da die Drehschwingungen der beiden doppelseitigen
Gelenkgabeln entgegengesetzt gerichtet sind, gleichen sich auch die auftretenden Massenkräfte vollständig aus. Der besondere  Vorteil dieses Gelenkes liegt darin, daß es bei gleichem Durchmesseraufbau doppelt starke Drehmomente übertragen kann, weil die Übertragung sowohl antriebsseitig als auch abtriebsseitig jeweils über insgesamt vier Gelenkzapfen, d.h. also über große Abscherquerschnitte erfolgt.

Bei den Doppelkreuzgelenken gemäß der Erfindung sind die Schwenklager zweckmäßig als Wälzlager insbesondere als Nadellager ausgebildet. In diesem Falle werden die Nadellager zweckmäßig durch Federstahldraht in den Lagerschalen festgehalten. Ein solcher Federstahldraht ist in den Fig. 2o und 22 mit dem Bezugszeichen 125 bezeichnet. Hierdurch läßt sich im Durchmesseraufwand Platz sparen.

Für die Doppelkreuzgelenke gemäß der Erfindung können als Lager auch vulkanisierte Gummilager verwendet werden, d. h. Lager, bei denen zwischen dem Lagerzapfen und der Lagerhülse jeweils eine einvulkanisierte Gummihülse angeordnet ist. Solche Lager sind völlig wartungsfrei, können gegebenenfalls einen Winkelversatz ausführen, in beiden axialen Richtung Schub übertragen und sind gleichfalls absolut homokinetisch.

Die aus den Fig. 23 bis 27 hervorgehende Ausführungsform des Doppelkreuzgelenkes entspricht in ihrer Grundform dem Doppelkreuzgelenk gemäß Fig. 1, so daß für die einander entsprechenden Teile die gleichen Bezugszahlen verwendet werden konnten.

In Abweichung vom Ausführungsbeispiel der Fig. 1 sind hier auf den Armen des Kreuzstückes 224 zusammenwirkende Kegelräder 26o, 262, 264 und 266 frei drehbar gelagert, die dazu dienen, die Ebene des Kreuzstückes 224 auf der Winkelhalbierenden zwischen der Drehebene der Antriebsgelenkgabel 1o und der Abtriebsgelenkgabel 3o zu halten. Jedes Kegelrad 26o, 262, 264 und 266 ist mit einem Verstellhebel 27o, 272, 274 und 276 verbunden. Die Verstellhebel 27o und 272 sind im Gabel-

grund der Antriebsgelenkgabel lo mittels Führungsbolzen 278 und 28o in zwei Führungen 29o und 292 geführt, deren Führungsebene senkrecht zueinander verlaufen. Dabei weist der Verstellhebel 27o zwei Führungsbolzen 278 auf, während der Verstellhebel 272 nur einen Führungsbolzen 28o hat. In gleicher Weise sind die Verstellhebel 274 und 276 im Gabelgrund der Abtriebsgelenkgabel 3o mittels Führungsbolzen 282 und 284 in Führungen 294 und 296 geführt, deren Führungsebenen senkrecht zueinander verlaufen. Dabei weist der Verstellhebel 274 zwei Führungsbolzen 282 auf, während der Verstellhebel 276 nur einen Führungsbolzen 284 hat. Die Verstellhebel 27o, 272, 274 und 276 sind jeweils noch mit einem Stützring 271, 273, 275 und 277 verbunden, der jeweils an dem dem zugehörigen Kegelrad 27o, 272, 274 und 276 befestigt ist und dem gegenüberliegenden Arm des Kreuzstückes 224 frei drehbar gelagert ist.

Die aus den Fig. 23 bis 27 hervorgehende Führung für das Kreuzstück 224 funktioniert wie folgt. Es sei angenommen, daß die in Fig. 24 links dargestellte Antriebsgelenkgabel feststeht, während die rechts dargestellte Abtriebsgelenkgabel aus der Papierebene herausgeschwenkt wird. In diesem Falle verschwenkt die Führung 294 mittels der Führungsbolzen 282 den Verstellhebel 274 aus der Papierebene heraus, so daß sich das Kegelrad 264 um den Arm des Kreuzstückes 224 verdreht, an welchem es gelagert ist. Dieser Verdrehvorgang ist in Fig. 23 durch einen Doppelpfeil angedeutet. Das Kegelrad 264 treibt beim Verdrehen die Kegelräder 262 und 266 an, welche auf dem feststehenden Kegelrad 26o abrollen. Auf diese Weise verschwenken die Kegelräder 262 und 266 die diametral gegenüberliegenden Arme des Kreuzstückes 224, auf welchen sie gelagert sind, und zwar um den halben Winkelbetrag, um den sich gleichzeitig das Kegelrad 264 verdreht.

Bei einer Verschwenkung der Abtriebsgelenkgabel in Fig. 24 in der Papierebene verdreht die Führung 296 über den

16

Führungsbolzen 284 und den Schwenkhebel 276 das Kegelrad 266, wie in Fig. 23 ebenfalls durch einen Doppelpfeil angedeutet ist. Das Kegelrad 266 verdreht die Kegelräder 26o und 264, welche auf dem feststehenden Kegelrad 262 abrollen. Auf diese Weise verschwenken die Kegelräder 26o und 264 die diametral gegenüberliegenden Arme des Kreuzstückes 224, an welchem sie gelagert sind, und zwar um den halben Winkelbetrag, um den sich gleichzeitig das Kegelrad 266 verdreht.

Da die Führung antriebsseitig ebenso ausgebildet ist, wie abtriebsseitig, ergibt sich der gleiche Effekt, wenn sich die Antriebsgelenkgabel 1o relativ zur Abtriebsgelenkgabel 3o verschwenkt. In jedem Falle wird das Kreuzstück 224 in der winkelhalbierenden Ebene zwischen der Drehebene der Antriebsgelenkgabel 1o und der Abtriebsgelenkgabel 3o gehalten. Dabei kommt man in besonders vorteilhafter Weise bei dieser Ausführungsform des Doppelkreuzgelenkes gemäß der Erfindung mit nur vier Kegelrädern aus.

Beim Ausführungsbeispiel gemäß Fig. 28 ist das Kreuzstück 324 als kastenförmiges Gehäuse mit nach außen kreuzförmig vorstehenden Gelenkzapfen ausgebildet. Im Innenraum des kastenförmigen Kreuzstückes 324 ist ein Lagerkreuz 35o angeordnet, auf welchem Kegelräder 36o, 362, 364 und 366 sowie Stützringe 361, 363, 365 und 367 gelagert sind, die die gleiche Funktion haben; wie die an Hand der Fig. 23 bis 27 erläuterten Kegelräder 26o, 262,264 und 266 und Stützringe 261, 263, 265 und 267. Die Anordnung dieser Teile in dem kastenförmig ausgebildeten Kreuzstück 324 hat den Vorteil, daß die Teile besser gegen Verschmutzung geschützt sind und gegebenenfalls in einem Ölbad laufen können, welches sich im Innenraum des kastenförmig ausgebildeten Kreuzstückes 324 befindet.

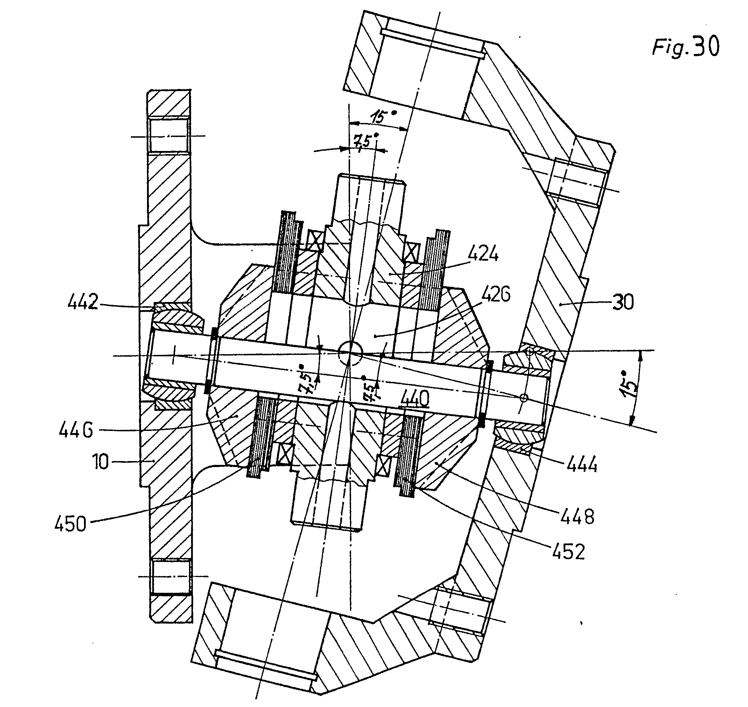

Die aus den Fig. 29 bis 36 hervorgehenden Ausführungsformen des Doppelkreuzgelenkes entsprechen in ihrem Grundaufbau dem Doppelkreuzgelenk gemäß Fig. 1, so daß für die einander entsprechenden Teile die gleichen Bezugszahlen verwendet werden konnten.

In Abweichung vom Ausführungsbeispiel gemäß der Fig. 1 ist beim Ausführungsbeispiel gemäß den Fig. 29 bis 31 das Kreuzstück 424 mit einer Öffnung 426 versehen, durch welche mit allseitig großem Spiel eine zentrale Führungsachse 44o hindurchtritt, die an beiden Seiten im Gabelgrund der Antriebsgelenkgabel 1o und der Abtriebsgelenkgabel 3o in sphärischen Gelenkpfannen 442 und 444 kugelgelenkig gelagert ist. Auf dieser zentralen Führungsachse 44o sitzen zwei Stützelemente 446 und 448, die das Kreuzstück 424 von beiden Seiten her derart abstützen, daß es in einer senkrecht zur Führungsachse 44o verlaufenden Ebene verbleibt. Auf diese Weise stellt sich die Ebene des Kreuzstückes automatisch auf eine winkelhalbierende Ebene zwischen den Drehebenen der Gelenkgabeln 1o und 3o ein. Zur Verminderung der Reibung zwischen den Stützelementen 446 und 448 und dem Kreuzstück 424 sind die Stützelemente 446 und 448 mit gehärteten und gegebenenfalls verchromten Stützflächen versehen und sind die Gegenflächen des Kreuzstückes 424 mit selbstschmierenden Gleitwerkstoffen 45o und 452, beispielsweise aus ölgetränkten Sintermetallkörpern, bestückt.

In Fig. 29 ist weiterhin dargestellt, wie die Lager der Zwischenglieder 12 und 32 an den Gelenkgabeln 1o und 3o und an dem Kreuzstück 424 durch in den Zwischengliedern 1o bzw. 3o und in dem Kreuzstück 424 befindliche Schmierbohrungen geschmiert werden können, wobei die Schmierbohrungen für die vier Lagerzapfen des Kreuzstückes 424 gegebenenfalls untereinander verbunden sein können, so daß alle Lager von einem Schmiernippel her geschmiert werden können.

In Fig. 3o ist zu erkennen, wie das Kreuzstück 424 durch die Führungsachse 44o auf die Winkelhalbierende eingestellt wird.

In Fig. 31 ist dargestellt, wie die Führungselemente von einer zwischen der Gelenkgabel 1o und dem Kreuzstück 424 angeordneten Gummimanschette 454 (linke Seite ) oder von einer zwischen dem Stützelement 448 und dem Kreuzstück 424 angeordneten Gummimanschette 456 (rechte Seite) abgedeckt werden können. Die besondere Anordnung der Gummimanschette 454 auf der linken Seite hat den Vorteil, daß sie zugleich das Lager der Führungsachse 44o abdeckt. Die besondere Anordnung der Gummimanschette 456 auf der rechten Seite hat den Vorteil, daß über das auf der Rückseite frei bleibende Stützelement 448 die Reibungswärme besser abgeführt werden kann. Diese Ausführungsform ist also für besonders hoch belastete Gelenke gedacht. Zur Erzielung einer einwandfreien Anlage zwischen den Stützelementen 446 und 448 an den Gegenflächen des Kreuzstückes 424 und zum Nachstellen von etwaigem Verschleiß wird das Stützelement 448 von einer Tellerfeder 458 gegen das Kreuzstück 424 angepreßt. Eine entsprechende Tellerfeder kann gegebenenfalls auch antriebsseitig, d. h. an dem Stützelement 446 vorgesehen sein.

Die Fig. 32 zeigt eine abgewandelte Ausführungsform des in den Fig. 29 bis 31 dargestellten Führungssystemes für das Kreuzstück.

Hier ist ebenfalls im Kreuzstück 524 eine Öffnung 526 vorgesehen, durch welche eine Führungsachse 54o hindurchtritt, die beidseitig im Gabelgrund der Gelenkgabeln 1o und 3o in sphärischen Gelenkpfannen 542 und 544 gelagert ist. Auf der Führungsachse 54o sitzen Stützelemente 546 und 548, die das Kreuzstück 524 von beiden Seiten derart abstützen, daß es in der winkelhalbierenden Ebene zwischen den Drehebenen der beiden Gelenkgabeln 1o und 3o gehalten wird. Zur Verringerung der Reibung zwischen den Stützelementen 446, 448 und dem Kreuzstück 424 sind zwischen den Stützflächen dieser Teile Führungskugeln 560 angeordnet. Diese Führungskugeln 560 werden in Kugelkäfigen 562 gehalten, die an mehreren Steuerbolzen 564 gelagert sind. Diese Steuerbolzen sind sowohl an den Stützelementen 546 und 548 als auch an dem Kreuzstück 524 kugelgelenkig gelagert. Die Lagerung der Kugelkäfige 562 an den Führungsbolzen 560 erfolgt durch mittig an den Führungsbolzen 560 befindliche kugelige Lagerflächen 566. Aufgrund dieser Lagerung verschieben sich die Kugelkäfige 562 stets um den halben Verschiebeweg, um den sich die Stützelemente 546, 548 relativ zum Kreuzstück 524 verschieben. Auch beim aus Fig. 32 hervorgehenden Führungssystem sind die Stützelemente 546, 548 und das Kreuzstück 524 durch Gummimanschetten 556 ver- bunden, so daß das Führungssystem nach außen abgedichtet ist und gegebenenfalls im Ölbad laufen kann. Die entstehende Wärme kann über die Rückseiten der Stützelemente 546, 548 abgeführt werden. Außerdem sind die Lager der Führungsachse 540 durch Gummimanschetten 558 abgedichtet.

Beim Ausführungsbeispiel der Fig. 33 bis 35 ist in dem Kreuzstück 624 wieder eine Öffnung 626 vorgesehen, durch welche eine Führungsachse 640 hindurchtritt, die beiderseits im Gabelgrund der Gelenkgabeln 10 und 30 in sphärischen Gelenkpfannen 642 und 644 gelagert ist. Der Raum zwischen der Führungsachse 640 und der Innenwand der Öffnung 626 im Kreuzstück 624 ist hier durch drei Exzenterringe 670, 672 und 674 ausgefüllt. Die Exzenterringe sind durch Nadellager 676, 678, 680 und 682 am inneren Umfang der Öffnung 626, aneinander und auf der Führungsachse 640 gelagert. Wie die Fig. 33 und 35 zeigen, kann sich die Führungsachse 640 unter Verdrehung der Exzenterringe 670, 672 und 674 in der Öffnung 626 verschieben. Bei dieser Verschiebung wird das Kreuzstück 624 ständig in einer Ebene gehalten, die senkrecht zur Führungsachse 640 verläuft, so daß die Ebene des Kreuzstückes 624 in der winkelhalbierenden Ebene zwischen den Drehebenen der Gelenkgabeln 10 und 30 gehalten wird. Zwischen dem Kreuzstück 624 und der Führungsachse 640 sind

beidseitig Gummimanschetten 654 angeordnet, so daß das von den Exzenterringen 670, 672 und 674 gebildete Führungssystem ständig im Ölbad laufen kann.

Die Fig. 36 zeigt eine Abwandlung des aus den Fig. 33 bis 35 hervorgehenden Führungssystemes. Auch hier ist in dem Kreuzstück 724 eine Öffnung 726 vorgesehen, durch welche eine Führungsachse 740 hindurchtritt, die beiderseits im Gabelgrund der Gelenkgabeln 10 und 30 an sphärischen Gelenkpfannen 742 und 744 gelagert ist. Der Raum zwischen der Führungsachse 740 und der Innenwand der Öffnung 726 im Kreuzstück 724 ist hier durch zwei Exzenterringe 770 und 772 ausgefüllt. Die Exzenterringe 770 und 772 sind durch Kugellager 776, 778 und 780 am inneren Umfang der Öffnung 726 aneinander und an der Führungsachse 740 gelagert. Die Kugellager 776, 778 und 780 befinden sich jeweils paarweise an den axialen Enden der Exzenterringe 770 und 772. Dabei sind die Kugellager 780 zwischen der Führungsachse 740 und dem inneren Exzenterring 770 in axialer Richtung nach außen versetzt angeordnet, wodurch das gesamte Führungssystem einen geringeren Durchmesser erhält. Die Verwendung von Kugellagern hat gegenüber Nadellagern den Vorteil, daß ein Kantenlauf der Wälzkörper nicht vorkommen kann.

Das aus den Exzenterringen 770 und 772 bestehende Führungssystem hält auch bei diesem Ausführungsbeispiel das Kreuzstück 724 ständig in einer senkrecht zur Führungsachse 740 verlaufenden Ebene und damit in der winkelhalbierenden Ebene zwischen den Drehebenen der beiden Gelenkgabeln 10 und 30. Auch hier ist das gesamte Führungssystem wieder durch Gummimanschetten 754 abgedeckt.

Alternativ zu den Ausführungsformen gemäß Fig. 33 bis 36 kann gegebenenfalls der innere Exzenterring 670, 770 mit der Führungsachse 640, 740 ein Stück bilden, welches in den sphärischen Gelenkpfannen 642, 644; 742, 744 drehbar gelagert ist. Hierdurch entfallen in vorteilhafter Weise die Nadellager 676 bzw. Kugellager 780.

Patentansprüche

================

1. Doppelkreuzgelenk mit einer Antriebsgelenkgabel, einer gleichartig ausgebildeten Abtriebsgelenkgabel und zwischen den Gelenkgabeln angeordneten Ver- bindungselementen,

d a d u r c h   g e k e n n z e i c h n e t, daß

a.) die Ebenen der Gelenkgabeln (1o, 3o) um 9o° gegen- einander verdreht angeordnet sind,

b.) die Verbindungselemente durch zwei den beiden Gelenk- gabeln (1o, 3o) zugeordnete Zwischenglieder (12, 32) und ein zwischen den Zwischengliedern (12, 32) angeordnetes Kreuzstück (24, 224, 324, 424, 524,624, 724) gebildet werden,

c.) jedes Zwischenglied (12, 32) um eine in der Ebene und senkrecht zur Drehachse (11, 31) der zugehörigen Ge- lenkgabel (1o,3o) verlaufende Schwenkachse (16, 36) verschwenkbar an der zugehörigen Gelenkgabel (1o, 3o) und um eine senkrecht zu dieser Schwenkachse (1o, 36) verlaufende Schwenkachse (26,46) verschwenkbar an dem Kreuzstück (24, 224, 324, 424, 524, 624, 724) gelagert ist,.

d.) alle vier Schwenkachsen (16, 26, 36, 46) in derselben Ebene liegen und sich im Mittelpunkt des Kreuzstückes (24, 224, 324, 424, 524, 624, 724) schneiden,

e.) das Kreuzstück (24, 224, 324, 424, 524, 624, 724) durch an den Gelenkgabeln (1o, 3o) abgestützte Führungs- elemente(5o, 52; 6o - 68; 7o - 78; 82, 84; 260 - 266, 270 - 276, 278 - 284; 360 - 366; 446, 448; 546, 548; 67o - 674; 770, 772) in einer Ebene gehalten wird, die durch die Winkelhalbierende des Winkels zwischen der Antriebsachse (11) und der Abtriebsachse (31) verläuft.

2. Doppelkreuzgelenk nach Anspruch 1, dadurch gekennzeichnet, daß die Zwischenglieder (12, 32) untereinander gleichartig als längliche Rechteckrahmen ausgebildet sind, an deren Schmalseiten nach einer Seite vorstehende Konsolen (13, 33) mit nach außen vorsehenden Lagerzapfen (14, 34) für die Lagerung an den Gelenkgabeln (1o, 3o) und an deren Längsseiten nach der gleichen Seite vorstehende Konsolen (18, 38) mit Lagerbohrungen (2o, 4o) zur Aufnahme von Lagerzapfen (22, 42) an den Enden des Kreuzstückes (24) vorgesehen sind.

3. Doppelkreuzgelenk nach Anspruch 1, dadurch gekennzeichnet, daß eines (12) der Zwischenglieder (12, 32) als länglicher Rechteckrahmen ausgebildet ist, an dessen Schmalseiten nach außen vorstehende Lagerzapfen (14) für die Lagerung an der Gelenkgabel (1o) vorgesehen sind und dessen Längsseiten eine Abkröpfung (17) aufweisen, in deren BereichLagerbohrungen (2o) zur Aufnahme von Lagerzapfen (22) des Kreuzstückes (24) angeordnet sind, und daß das andere Zwischenglied ( 32) ebenfalls als Rechteckrahmen mit Lagerzapfen (34) an den Schmalseiten und Lagerbohrungen (4o) in den Längsseiten ausgebildet ist, wobei hier die Schmalseiten entsprechend den Längsseiten des anderen Zwischengliedes (12) abgekröpft sind.

4. Doppelkreuzgelenk nach den Ansprüchen 1 bis 3, dadurch gekennzeichnet, daß die Führungselemente durch axial konzentrisch angeordnete Druckfedern (5o, 52; 8o, 84) gebildet werden, die einerseits an dem Kreuzstück (24) und andererseits an den Gelenkgabeln (1o, 3o) abgestützt sind.

5. Doppelkreuzgelenk nach Anspruch 4, dadurch gekennzeichnet, daß die Druckfedern als Schraubenfedern (5o, 52) ausgebildet sind.

6. Doppelkreuzgelenk nach Anspruch 4, dadurch gekennzeichnet, daß die Druckfedern als Gummifedern (82, 84) ausgebildet sind.

7. Doppelkreuzgelenk nach den Ansprüchen 1 bis 6, dadurch gekennzeichnet, daß das Kreuzstück (24) mittig mit einer Durchgangsöffnung (8o) versehen ist.

8. Doppelkreuzgelenk nach den Ansprüchen 1 und 2, dadurch gekennzeichnet, daß das Kreuzstück (24) mittels an ihm gelagerter Kegelräder (6o - 64, 7o - 74) und zugehöriger Verstellhebel (66, 76) und Führungen (68, 78) derart mit den Zwischengliedern (12, 32) und den Gelenkgabeln (1o, 2o) verbunden ist, daß sich die Ebene des Kreuzstückes (24) stets auf die Winkelhalbierende des Winkels zwischen Antriebsachse (11) und Abtriebsachse (31) einstellt.

9. Doppelkreuzgelenk nach Anspruch 8, dadurch gekennzeichnet, daß zum Zwecke der Zwangsführung des Kreuzstückes (24) für jedes Zwischenglied (12, 32) ein Satz von Kegelrädern (6o bis 64 bzw. 7o bis 74) vorgesehen ist.

1o. Doppelkreuzgelenk nach den Ansprüchen 8 und 9, dadurch gekennzeichnet, daß die Kegelräder (6o bis 64; 7o bis 74) als den auftretenden Schwenkwinkeln angepaßte Kegelradsegmente ausgebildet sind.

11. Doppelkreuzgelenk nach einem der Ansprüche 1 bis 1o, dadurch gekennzeichnet, daß sämtliche Schwenklager als Wälzlager, insbesondere als Nadellager ausgebildet sind.

12. Doppelkreuzgelenk nach einem der Ansprüche 1 bis 11, dadurch gekennzeichnet, daß sämtliche Schwenklager als vulkanisierte Gummilager ausgebildet sind.

13. Doppelkreuzgelenk nach Anspruch 1, dadurch gekennzeichnet, daß das Kreuzstück (224) mittels drehbar an ihm gelagerter Kegelräder (26o, 262, 264, 266) und zugehörigen Verstellhebeln (27o, 272, 274, 276) und Führungen (278, 28o, 282, 284) derart mit den Gelenkgabeln (1o, 3o) verbunden ist, daß sich die Ebene des Kreuzstückes (224) stets auf die Winkelhalbierende zwischen Antriebsachse (11) und Abtriebsachse (31) einstellt.

14. Doppelkreuzgelenk nach Anspruch 13, dadurch gekennzeichnet, daß auf jedem Arm des Kreuzstückes (224) ein Kegelrad (26o, 262, 264, 266) drehbar gelagert ist, daß jedem Kegelrad (26o, 262, 264, 266) ein Verstellhebel (27o, 272, 274, 276) zugeordnet ist und daß jede Gelenkgabel (1o, 3o) zwei Führungen (278, 28o; 282, 284) für die Verstellhebel (27o, 272; 274, 276) mit senkrecht zueinander verlaufenden Führungsebenen aufweist.

15. Doppelkreuzgelenk nach Anspruch 14, dadurch gekennzeichnet, daß das Kreuzstück (324) als kastenförmiges Gehäuse mit nach außen kreuzförmig vorstehenden Lagerzapfen (22, 42) ausgebildet ist und in seinem Inneren ein Lagerkreuz (35o) aufnimmt, an welchem die Kegelräder (36o, 362, 364, 366) gelagert sind.

16. Doppelkreuzgelenk nach Anspruch 1, dadurch gekennzeichnet, daß die beiden Gelenkgabeln (1o, 3o) durch eine zentrale Führungsachse (44o, 54o, 64o, 74o) miteinander verbunden sind, die im Gabelgrund beider Gelenkgabeln (1o, 3o) kugelgelenkig gelagert ist und durch eine Öffnung (426, 526, 626, 726) im Zentrum des Kreuzstückes (424, 524, 624, 724) hindurchtritt, wobei zwischen der Führungsachse (44o, 54o, 64o, 74o) und dem Kreuzstück (424, 524, 624, 724) Führungselemente (446, 448; 546, 548; 67o, 672, 674; 77o, 772) vorgesehen sind, durch welche die Ebene des Kreuzstückes (424, 524, 624, 724) senkrecht zur Führungsachse (44o, 54o, 64o, 74o) gehalten wird.

17. Doppelkreuzgelenk nach Anspruch 16, dadurch gekennzeichnet, daß die Führungselemente als auf der Führungsachse sitzende Stützelemente (446, 448; 546, 548) ausgebildet sind, die von beiden Seiten her das Kreuzstück (424; 524) abstützen.

18. Doppelkreuzgelenk nach Anspruch 17, dadurch gekennzeichnet, daß die Stützelemente (446, 448) glatte, gehärtete Stützflächen aufweisen, die an Gegenflächen des Kreuzstückes (424) anliegen, welche mit selbstschmierenden Gleitwerkstoffen (45o, 452) versehen sind.

19. Doppelkreuzgelenk nach Anspruch 17, dadurch gekennzeichnet, daß zwischen den Stützelementen (546, 548) und dem Kreuzstück (524) Führungskugeln (56o) angeordnet sind, deren Kugelkäfige (562) von Steuerbolzen (564) gehalten werden, die sowohl an dem Kreuzstück (524) als auch an den Stützelementen (546, 548) in Kugelgelenken gelagert sind.

2o. Doppelkreuzgelenk nach einem der Ansprüche 17 bis 19, dadurch gekennzeichnet, daß die Stütztelemente (446, 448) mindestens von einer Seite her durch Federkraft gegen das Kreuzstück (424) angepreßt werden.

21. Doppelkreuzgelenk nach einem der Ansprüche 18 bis 2o, dadurch gekennzeichnet, daß der Raum zwischen dem Kreuzstück (424; 524) und den Stützelementen (446, 448; 546, 548) bzw. zwischen dem Kreuzstück (424) und dem Gabelgrund der Gelenkgabel (1o) durch Gummimanschetten (454, 456; 556) abgedichtet ist.

22. Doppelkreuzgelenk nach Anspruch 16, dadurch gekennzeichnet, daß zwischen der Führungsachse (64o; 74o) und der Öffnung (626; 726) im Zentrum des Kreuzstückes (624; 724) mindestens zwei Exzenterringe (67o, 672, 674; 77o, 772) angeordnet sind, die durch Wälzlager (676, 678, 68o, 682; 776, 778, 78o) aneinander und am inneren Umfang Öffnung (626; 726) sowie am äußeren Umfang der Führungs- achse (64o; 74o) gelagert sind.

23. Doppelkreuzgelenk nach Anspruch 22, dadurch gekennzeichnet, daß die Führungsachse (64o; 74o) und der innere Exzenterring (67o; 77o) ein Stück bilden, welches in den beiden Gelenkgabeln (1o; 3o) kugelgelenkig und drehbar gelagert ist.

24. Doppelkreuzgelenk nach Anspruch 22, dadurch gekennzeichnet, daß die Wälzlager (676, 678, 68o, 682) als Nadellager ausgebildet sind.

25. Doppelkreuzgelenk nach Anspruch 24, dadurch gekennzeichnet, daß die Wälzlager (776, 778, 78o)als Kugellager ausgebildet sind.

26. Doppelkreuzgelenk nach Anspruch 25, dadurch gekennzeichnet, daß die Kugellager (776, 778, 78o) axial gegeneinander versetzt angeordnet sind.

27. Doppelkreuzgelenk nach einem der Ansprüche 22 bis 26, dadurch gekennzeichnet, daß die Führungsachse (64o; 74o) und das Kreuzstück (624, 724) durch die Exzenterringe (67o, 672, 674; 77o, 772) abdeckende Gummimanschetten (654; 754) verbunden sind.

28. Doppelkreuzgelenk nach einem oder mehreren der Ansprüche 1 bis 27, dadurch gekennzeichnet, daß in den Lagerzapfen (14, 34) der Zwischenglieder (12, 32) und/oder in den Lagerzapfen (22, 42) des Kreuzstückes (24) Schmierbohrungen angeordnet sind, wobei die Schmierbohrungen im Kreuzstück (24) untereinander verbunden sind.

**0086864**

29. Doppelkreuzgelenk, dadurch gekennzeichnet,

a.) daß es einen Antriebsflansch (11o) aufweist, der mit einem vierarmigen Antriebskreuzstück (114) drehfest verbunden ist,

b.) daß es einen Abtriebsflansch (111) aufweist, der mit einem vierarmigen Abtriebskreuzstück (115) drehfest verbunden ist,

c.) daß es zwei doppelseitige Gelenkgabeln (134, 136) enthält, die um 9o° gegeneinander verdreht angeordnet sind und von denen jede zwei in derselben Ebene liegende Gabelansätze (13o, 132) aufweist, die einerseits das das Antriebskreuzstück (114) und andererseits das Abtriebskreuzstück (115) umgreifen,

d.) daß die beiden doppelseitigen Gelenkgabeln (134, 136) um ihre gemeinsame Längsachse gegeneinander verdrehbar sind,

e.) daß zwischen den Gabelansätzen (13o, 132) der doppelseitigen Gelenkgabeln (134, 138) und den Kreuzstücken (114, 115) untereinander gleichartige Zwischenglieder (122, 124) angeordnet sind,

f.) daß jedes Zwischenglied um eine in der Ebene und senkrecht zur Drehachse der zugehörigen Gelenkgabel (134, 136) verlaufende Schwenkachse verschwenkbar an derzugehörigen Gelenkgabel (134, 136) und um eine senkrecht zu dieser Schwenkachse verlaufende Schwenkachse verschwenkbar an dem zugehörigen Kreuzstück (116, 116) gelagert ist,

g.) und daß die Schwenkachsen der Zwischenglieder (122, 124) an den zugehörigen Gabelansätzen (13o, 132) der doppelseitigen Gelenkgabeln (134, 136) und dem zugehörigen Zwischenglied (122, 124) jeweils in derselben Ebene liegen und sich im Mittelpunkt des Kreuzstückes (116, 116) schneiden.

0086864

Fig.1

Fig. 2

C - D

Fig. 3

A - B

Fig. 4
E - F

14/34

18/38

16/36

18/38

20/40

X

20/40

12/32

14/34

Fig. 5

14/34

16/36

18/38

20/40

12/32

E

F

14/34

- 4/23 -

0086864

Fig 6
a - a

Fig. 7
e - e

Fig.8
c - c

0086864

0086864

Fig. 10

Fig. 9
f – f

34  36  40  32  g  f

Fig. 11

g – g

Fig. 12

J - K

- 8/29 -

0086864

Fig. 13

G – H

– 9/29 –

Fig. 14

Fig. 15

Fig. 16

L

M

N

O

66/76

60/70

66/76

60/70

60/70

66/76

60/70

Fig. 17

S - T

Fig. 18

P - R

Fig. 19

Fig. 20

126 β

125

124

118

122

132

110

128

112

114

118

124

126 β

130 130

126 Y

125

124

122 132

118

117

115

138

136

132

113

132 122

118

124

111

130 130

126 Z

134

0086864

— 14/29 —

Fig. 21

ß - ß

Fig. 22

Y-Z

*Fig.23*
*B - B*

0086864

Fig.24
A - A

0086864

Fig.25
C-C

Fig.26

Fig.27

260
262
264
266

260
262
264
266

270
272
274
276

270
272
274
276

271
273
275
277

0086864

0086864

Fig. 28

Fig.29

Fig. 30

*Fig.* 31

Fig.32

0086864

Fig.33

624
626
640
670
672
674
676
678
680
682

Fig. 34

226  G24  G82  G80  G654  G654  G678  G676  G642  G644  G670  640  10  30  G672  G674

27/29

0086864

Fig. 35

Fig. 36

30

10

754  724  726

776  776

778  778

780  780

742

744

740

E.

770

772

754

0086864

Europäisches
Patentamt

**EUROPÄISCHER RECHERCHENBERICHT**

**0086864**
Nummer der Anmeldung

EP 82 10 3478

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | DE-A-2 850 301 (CHIVARI)  <br><br>* Insgesamt *  <br><br>--- | 1,4,5, 7,8,10 -13,15 -17 | F 16 D 3/32 |
| Y | FR-A- 979 086 (GODAR)  <br><br>* Insgesamt *  <br><br>--- | 1,4,5, 7,8,10 -13,15 -17 | |
| Y | US-A-2 923 141 (SIMONDS)  <br>* Insgesamt *  <br><br>--- | 4,5 | |
| Y | FR-A- 818 717 (CARRIER)  <br>* Insgesamt * | 11,16 | |
| | | | RECHERCHIERTE SACHGEBIETE (Int. Cl. ³) |
| A | | 1,7 | F 16 D 3/00 |
| Y | FR-A-1 535 633 (BASTID)  <br>* Insgesamt * | 16,17 | |
| A | | 1 | |
| Y | FR-A-1 316 866 (RHEINMETALL)  <br>* Seiten 3,4; Abbildungen 9-14 * | 16,17 | |
| A | | 1 | |
| | --- -/- | | |

Der vorliegende Recherchenbericht wurde für alle Patentansprüche erstellt.

| Recherchenort <br> DEN HAAG | Abschlußdatum der Recherche <br> 25-04-1983 | Prüfer <br> BALDWIN D.R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches Patentamt

**EUROPÄISCHER RECHERCHENBERICHT**

**0086864**
Nummer der Anmeldung

EP 82 10 3478

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 391 389 (RINEER) <br> * Seiten 4,5; Abbildung 10 * | 2 | |
| A | US-A-1 853 171 (NETTENSTROM) <br> * Insgesamt * | 4,5 | |
| A | US-A-3 621 676 (SHACTER) <br> * Insgesamt * | 14 | |
| A | DE-A-2 453 084 (SOTIROV) <br> * Insgesamt * | 29 | |
| A | CH-A- 476 929 (SOUTHWESTERN INDUSTRIES) <br> * Spalte 6; Abbildung 4 * | 29 | |
| A | GB-A- 991 346 (B.R.D.) <br> * Insgesamt * | 19 | RECHERCHIERTE SACHGEBIETE (Int. Cl. 3) |
| A | DE-C- 930 056 (VILLARD) | | |
| A | FR-A- 714 773 (FENAILLE) | | |
| A | FR-E- 72 995 (REYNAL DE SAINT-MICHEL) | | |
| A | DE-A-2 013 765 (KLEIN) | | |
| | --- -/- | | |

Der vorliegende Recherchenbericht wurde für alle Patentansprüche erstellt.

| Recherchenort <br> DEN HAAG | Abschlußdatum der Recherche <br> 25-04-1983 | Prüfer <br> BALDWIN D.R. |
|---|---|---|

**0086864**
Nummer der Anmeldung

EP  82 10 3478

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | US-A-3 456 458  (DIXON) | | |
| | ----- | | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 25-04-1983 | BALDWIN D.R. |